# EUROPÄISCHE PATENTSCHRIFT

(11) **EP 3 172 111 B1**
(45) Veröffentlichungstag und Bekanntmachung des Hinweises auf die Patenterteilung: **12.09.2018**
(21) Anmeldenummer: 15767235.3
(22) Anmeldetag: 21.07.2015
(51) Int. Cl.: B62B 7/00, B62B 7/14, B62B 7/06, B62B 7/10

(54) **KINDERWAGEN**
STROLLER
POUSSETTE

(30) Priorität: 23.07.2014 DE 102014010731; 10.09.2014 DE 102014013065; 30.06.2015 DE 102015008317
(43) Veröffentlichungstag der Anmeldung: 31.05.2017
(73) Patentinhaber: Endepro GmbH, 96257 Redwitz a. d. Rodach (DE)
(72) Erfinder: POPP, Alexander, Andre, 96257 Redwitz (DE)
(74) Vertreter: Küchler, Stefan
(86) Internationale Anmeldenummer: PCT/IB2015/001217
(87) Internationale Veröffentlichungsnummer: WO 2016/012849

(56) Entgegenhaltungen:
- DE-U1-202014 102 891
- US-A1- 2014 167 393

## Beschreibung

Die Erfindung richtet sich auf einen Kinderwagen, umfassend seitliche Gelenkverbindungen mit Anschlüssen für je einen Schenkel eines Schiebebügels, eine Vorderradstrebe und/oder eine Hinterradstrebe, von welchen wenigstens zwei Elemente um eine quer zur Fahrtrichtung verlaufende Gelenkachse relativ zueinander verschwenkbar sind, wobei der Anschluss für ein erstes von wenigstens zwei gegeneinander verschwenkbaren Elementen einer Gelenkverbindung mit einem inneren, scheibenförmigen Teil der Gelenkverbindung drehfest verbunden ist, während der Anschluss für ein zweites der wenigstens zwei gegeneinander verschwenkbaren Elemente der betreffenden Gelenkverbindung mit zwei zu dem scheibenförmigen Teil parallelen Gelenkplatten der betreffenden Gelenkverbindung drehfest verbunden oder gekoppelt ist, welche das innere, scheibenförmige Teil an dessen beiden Flachseiten umgreifen. Dokument US2014/0167393A1 zeigt einen Kinderwagen mit allen Merkmalen des Oberbegriffs des Anspruchs 1. Kinderwagen sollen universell einsetzbar sein, dabei bequem, funktionell und stabil während des Gebrauchs; in Zeiten des Nichtgebrauchs sollen Kinderwagen dagegen möglichst wenig stören, also nur so wenig Platz beanspruchen wie möglich.
Gerade die letzte Bedingung ist wohl am schwersten zu erfüllen, weil dies nur durch eine effiziente Klappmechanik zu erreichen ist. Dabei ist es jedoch nicht damit getan, an geeigneten Stellen Gelenke vorzusehen; vielmehr sollen diese Gelenkverbindungen in auseinandergeklapptem Zustand möglichst steif sein, so dass der Kinderwagen eine ausreichende Stabilität erhält. Obendrein soll die Verstellung des Gelenks noch möglichst einfach und bequem sein. Beim Zusammenklappen erweisen sich besonders sperrige Bestandteile eines Kinderwagens wie dessen Schiebebügel als problematisch.
Aus den Nachteilen des beschriebenen Standes der Technik resultiert das die Erfindung initiierende Problem, einen gattungsgemäßen Kinderwagen derart weiterzubilden, dass dieser möglichst klein zusammenfaltbar ist, dabei jedoch im auseinandergefalteten Zustand möglichst stabil.

Die Lösung dieses Problems gelingt bei einem gattungsgemäßen Kinderwagen dadurch, dass zwecks Arretierung der Gelenkverbindung wenigstens zwei seitliche Gelenkplatten mittels eines Verbindungsteils aufeinander zu gezogen und dadurch reibschlüssig und/oder formschlüssig von beiden Seiten an das innere, scheibenförmige Teil der Gelenkverbindung pressbar sind, zwecks Relativverstellung der Gelenkverbindung unter Lockerung des Verbindungsteils von dem inneren, scheibenförmigen Teil jedoch so weit lösbar sind, dass der Reib- und Formschluss aufgehoben ist.

Die beiden seitlichen Gelenkplatten sind nicht überall starr miteinander verbunden, so dass das innere, scheibenförmige Teil von diesen links und rechts umgriffen wird. Vorzugsweise sind sie nur entlang eines Teils ihrer Peripherie unmittelbar verbunden, nämlich in jenem Umfangsbereich, wo das betreffende, verschwenkbare Element abzweigt. Nur an dieser Stelle ist durch die periphere Verbindung der Abstand zwischen den beiden seitlichen Gelenkplatten exakt vorgegeben; im gegenüber liegenden Bereich der Peripherie und in einem mittleren Bereich der Gelenkplatten sind jene nicht starr, sondern können sich dank ihrer begrenzt elastischen Materialeigenschaften etwa in Richtung der Gelenkachse relativ zueinander verbiegen, also einander annähern oder ggf. voneinander weg biegen. Etwa im Bereich der Mitte des Gelenks können die seitlichen Gelenkplatten wie auch das innere, scheibenförmige Teil von der Gelenkachse durchsetzt werden, welche vorzugsweise aus Metall gefertigt ist. Endseitige Kappen oder radiale Verbreiterungen dieser Gelenkachse sind hinsichtlich ihres axialen Abstandes in Längsrichtung der Gelenkachse jedoch derart bemessen, dass sie ein Spiel zwischen den seitlichen Gelenkplatten und dem von jenen umgriffenen, inneren, scheibenförmigen Teil zulassen. Solche endseitige Kappen erzeugen also im Bereich der Gelenkachse keinen Reib- oder Formschluss zwischen den seitlichen Gelenkplatten einerseits und dem inneren, scheibenförmigen Teil andererseits. Dies obliegt stattdessen einem von einer Person steuerbaren Verbindungsteil im Bereich des Gelenks, welches bei seiner Verstellung jeweils auf die beiden seitlichen Gelenkplatten einwirkt, um zwischen jenen eine Zugkraft parallel zu der Gelenkachse auszuüben oder nicht.

Die Einflussnahme auf die beiden seitlichen Gelenkplatten erfolgt vorzugsweise mittels eines diesen gegenüber beweglichen Verbindungsteils, das sich ggf. sogar unmittelbar durch das innere, scheibenförmige Teil der Gelenkverbindung hindurch erstrecken kann und in der Lage ist, auf die beiden seitlichen Gelenkplatten eine erhebliche anziehende Wirkung auszuüben, wodurch jene von beiden Seiten gegen das innere, scheibenförmige Teil gepresst werden und dabei mit jenem eine reib- und/oder formschlüssige Verbindung ausbilden. Durch Rückstellung des beweglichen Verbindungsteils können die vorübergehend miteinander verbundenen Teile wieder voneinander gelöst werden, um den Reib- und Formschluss aufzuheben und dann eine Relativverstellung der gegeneinande verschwenkbaren Teile zu ermöglichen.

Wie weiter unten erläutert, kann das Verbindungsteil beispielsweise nach Art eines Keils auf die beiden seitlichen Gelenkplatten einwirken, um jene mit hoher Kraft einander anzunähern bzw. gegen das innere, scheibenförmige Teil zu pressen. Von großem Vorteil ist dabei, dass im Rahmen der Koppelung zwischen dem Verbindungsteil und den beiden seitlichen Gelenkplatten eine Kraftübersetzung erfolgt, so dass die steuernde, auf das Verbindungsteil einwirkende Kraft möglichst in eine demgegenüber größere Anpresskraft übersetzt wird, so dass sich die Gelenkverbindung in arretiertem Zustand verhält, als ob die an und für sich gelenkig relativ zueinander verschwenkbaren Elemente aus einem einzigen Guß wären.

Ein solches Verhalten wird außerdem dadurch verstärkt, dass die beiden seitlichen Platten von entgegengesetzten Seiten gegen das innere, scheibenförmige Teil gepresst werden und also wie eine Lagergabel wirken, die das innere, scheibenförmige wie ein Teil eines Rades an beiden Seiten seiner Grundebene umgreift und lagert. Radiale Relativbewegungen werden durch eine das innere, scheibenförmige Teil sowie beide seitlichen Gelenplatten gemeinsam durchsetzende Schwenkachse ausgesschlossen.

Selbst bei gelockertem Verbindungsteil können die seitlichen Gelenkplatten zwar gegenüber dem inneren, scheibenförmigen Gelenkteil rotiert werden; gleichzeitig verhindern die Endkappen oder sonstigen radialen Erweiterungen der Gelenkachse jedoch ein übermäßiges Auseinanderbiegen der seitlichen Gelenkplatten und erhalten dadurch die Strukturstabilität des Gelenks.

Befindet sich das Gelenk infolge einer Umsteuerung des Verbindungsteils dagegen im Arretierungszustand, so sind die beiden seitlichen Gelenkplatten insgesamt an drei Stellen miteinander verbunden: Einmal - ständig - im Bereich der starren, peripheren Verbindung zwischen den beiden seitlichen Gelenkplatten, wo deren Abstand dadurch immer konstant bleibt; zweitens durch die Gelenkachse, die radiale Relativbewegungen der verschiedenen Gelenkteile unterbindet und axiale Relativbewegungen der beiden seitlichen Gelenkplatten begrenzt; sowie drittens durch das Verbindungsteil, welches im Arretierungszustand bestrebt ist, die beiden seitlichen Gelenkplatten mit einer hohen Kraft, die im bevorzugten Fall größer ist als die auf das Verbindungsteil einwirkende Betätigungskraft, zusammenzuziehen, bis diese reib- oder gar formschlüssig gegen das innere, scheibenförmige Gelenkteil gepresst werden, jedenfalls in der Umgebung des Verbindungsteils. Im Bereich der starren, peripheren Verbindung bleibt der Abstand zwischen den seitlichen Gelenkplatten konstant, und dazwischen gibt es einen Verformungsbereich, wo sich die Gelenkplatten verbiegen, um allen ihnen aufgezwungenen Randbedingungen zu entsprechen.

Im übrigen kann jede der seitlichen Gelenkplatten aus nur einem einzigen Teil bestehen oder auch aus mehreren Teilen zusammengesetzt sein, sofern dies herstellungstechnisch notwendig ist, beispielsweise weil sich die Teile sonst spritzgusstechnisch nicht herstellen oder nicht entformen lassen.

Indem die Arretierung wenigstens einer Gelenkverbindung zweistufig ausgebildet ist, umfassend eine automatische Einrastung sowie eine manuell zu betätigende Verriegelung, ergeben sich weitere Vorteile. Denn durch Auftrennung des Arretierungsvorgangs in zwei voneinander getrennte Abläufe, welche unabhängig voneinander ablaufen, jedoch miteinander in Zusammenhang stehen, indem die manuell zu betätigende Verriegelung das vorangehende, automatische Einrasten voraussetzt, während ein Ausrasten erst nach vorangehendem manuellen Lösen der Verriegelung möglich ist, lassen sich unterschiedliche, üblicherweise miteinander konkurrierende Ziele bei der Auslegung eines Gelenks in Einklang bringen. Denn während der automatische Einrastvorgang die Betätigung erleichtert, indem die richtige, einrastfähige Position automatisch erkannt wird, dient die manuelle Verriegelung einer möglichst starren Arretierung, wobei die an das Gelenk anschließenden Elemente wie insbesondere der Schiebebügel unbeweglich mit dem Gelenk verbunden werden. Letzteres wird dadurch möglich, dass eine Person in der Gewissheit, dass sich das Gelenk durch das automatische Einrasten in einer für das Verriegeln optimalen Position befindet, bedenkenlos die für eine starre Verbindung erforderliche Krafteinwirkung ausüben kann, ohne dadurch irgendwelche Teile des Gelenks zu beschädigen. Dadurch können enorme Betätigungskräfte steuernd auf ein Verbindungsteil zwischen zwei seitlichen Gelenkplatten einwirken, und falls eine solche, steuernde Betätigungskraft durch die Koppelmechanik zwischen den Gelenkplatten nochmals eine Verstärkung herbeiführt, lassen sich extrem hohe Anpresskräfte zwischen den seitlichen Gelenkplatten und dem inneren, scheibenförmigen Teil entwickeln.

Es hat sich als günstig erwiesen, dass zur Arretierung und/oder Verriegelung einer Gelenkverbindung des Fahrgestells, insbesondere zwischen dem Anschluss für den Schiebebügel einerseits und dem Gehäuse des Gelenks andererseits, innenliegende Bereiche der Stirnseiten des Gehäuses reibschlüssig an wenigstens ein inneres Teil des Gelenks gepresst werden, und/oder dass in Richtung der Drehachse des betreffenden Gelenks endseitige Stirnseiten eines Teils reibschlüssig an ein anderes inneres Teil oder an einen innenseitigen Bereich des Gelenks gepresst werden. Ein solcher Reibschluss ist in der Lage, hohe Kräfte zu übertragen und trägt somit zu einer besonders starren Gelenkverbindung bei.

Die Gelenkverbindung kann von einem Gehäuse umgeben sein, das eine zylindrische Grundform aufweist mit einer die Dreh- oder Gelenkachse umgebenden Mantelfläche und zwei dieselbe an beiden Enden abschließenden Stirnflächen. So ist es beispielsweise möglich, eine Stirnseite des Gehäuses mit einem anzuschließenden Teil zu verbinden, beispielsweise über einen Adapter mit einem sitz- oder schalenförmigen Aufsatz, während ein anderer Gehäuseabschnitt mit einem weiteren Anschluss beispielsweise für eine Vorder- oder Hinterradstrebe fest verbunden sein kann. Daneben oder dazwischen - beispielsweise im Bereich der Mantelfäche - können sich die übrigen, verschwenkbaren Anschlüsse befinden, also zum Beispiel für den Schiebebügel oder für eine Vorder- oder Hinterradstrebe.

Die Erfindung lässt sich dahingehend weiterbilden, dass an den Innenseiten von Stirnflächen des Gehäuses oder eines oder mehrerer daran festgelegter Teile Vertiefungen und/oder Hinterschneidungen vorgesehen sind, worin ein demgegenüber verstellbares Gelenkelement eingreifen kann. Diese Vertiefungen und/oder Hinterschneidungen bestimmen durch ihre Berandungsflächen den Spielraum für das darin aufgenommene Teil oder Gelenkelement.

Dabei kann die Form dieser Vertiefungen und/oder Hinterschneidungen unter jeweils besonderen Bedingungen unterschiedliche Verstellmöglichkeiten bzw. -richtungen erlauben. Bevorzugt ist nur bei einer oder mehreren, diskreten Positionen für eine Raumrichtung eine Verstellung in einer anderen Raumrichtung möglich.

Insbesondere kann vorgesehen sein, dass das verstellbare Gelenkelement gegenüber der Dreh- oder Gelenkachse in zwei unterschiedlichen Raumrichtungen verstellbar ist, insbesondere in radialer Richtung einerseits sowie in azimutaler Richtung andererseits. Wie oben angedeutet, werden im Allgemeinen diese beiden Verstellmöglichkeiten nicht gleichzeitig möglich sein, sondern eine Verstellmöglichkeit in einer Raumrichtung setzt voraus, dass in der anderen Raumrichtung eine "Arretierung" eingetreten ist bzw. eine Begrenzung oder Einschränkung wirksam ist.

Die Erfindung empfiehlt, dass das verstellbare Gelenkelement von einem an das Gelenk angeschlossenen Teil des Kinderwagens in azimutaler Richtung mitgenommen wird, insbesondere von einem Anschluss oder Seitenschenkel des Schiebebügels. Die azimutale Position des verstellbaren Gelenkteils entspricht damit der Schwenkstellung des daran angeschlossenen Teils des Kinderwagens, insbesondere eines Teils von dessen Rahmen oder Fahrgestell, wie dem Schiebebügel oder einer Vorder- oder Hinterradstrebe.

Die Erfindung lässt sich dahingehend weiterbilden, dass Vertiefungen an den Innenseiten von Stirnflächen des Gehäuses oder eines oder mehrerer daran festgelegter Teile einem kreisbogenförmigen, zu der Dreh- oder Gelenkachse konzentrischen Verlauf folgen, so dass das verstellbare Gelenkelement zusammen mit dem daran angeschlossenen Teil des Kinderwagens drehverstellbar ist, insbesondere zwischen den Enden des kreisbogenförmigen Bereichs der Vertiefung. Vorzugsweise ist eine solche Drehverstellung des beweglichen Gelenkteils nur in einem bestimmten radialen Abstand zu der Gelenkachse möglich. Demnach kann durch Einflussnahme auf diesen radialen Abstand der Arretierungszustand des Gelenks gesteuert oder beeinflusst werden.

Der kreisbogenförmigen Bereich der Vertiefung kann an einer, zwei oder mehr Stellen radiale Erweiterungen aufweisen, welche eine Radialbewegung des verstellbaren Gelenkelements an der betreffenden Stelle erlauben. Eine solche Radialbewegung kann mit einem Verriegelungsvorgang gleichgesetzt werden. Eine solche ist aber nur an bestimmten Schwenkstellungen zulässig, die durch radiale Erweiterungen des kreisbogenförmigen Bereichs der Vertiefung oder Hinterschneidung vordefiniert sind.

Die Erfindung erfährt eine vorteilhafte Weiterbildung dahingehend, dass eine, zwei, mehrere oder alle radialen Erweiterungen des kreisbogenförmigen Bereichs der Vertiefung sich von jenem weg radial nach außen erstrecken. In radial außen liegenden Bereichen ist aufgrund des größeren Abstands zur schwenkachse die Hebellänge größer, so dass sich bei gleichen Kräften höhere (Halte-) Drehmomente aufbringen lassen und damit der arretierte und verriegelte Zustand des Gelenks um so steifer ist.

Das verstellbare Gelenkelement sollte durch wenigstens ein Federelement in der selben Radialrichtung vorgespannt sein, in welche sich eine, zwei, mehrere oder alle radialen Erweiterungen des kreisbogenförmigen Bereichs der Vertiefung erstrecken. Damit wird erreicht, dass das verstellbare Gelenkelement durch das Federelement selbsttätig in dessen vorgespannte Richtung gezogen wird, sobald dieses eine geometrisch vordefinierte Erweiterung des Bewegungsspielraums in eben dieser (radialen) Richtung verspürt.

Damit eine einmal eingerastete Position selbsttätig nicht mehr verlassen werden kann, sollten eine, zwei, mehrere oder alle radialen Erweiterungen des kreisbogenförmigen Bereichs der Vertiefung zur Begrenzung oder Vermeidung einer weiteren Drehverstellung des darin eingerasteten verstellbaren Gelenkelements eine in einer Drehrichtung vordere sowie eine in der selben Drehrichtung hintere Begrenzungsfläche aufweisen. Während in nicht eingerastetem Zustand also eine viel weitere Drehverstellung möglich wäre, wird dieser Verstellbereich in eingerastetem Zustand verengt auf die jeweiliege Schwenkposition selbst.

Sofern die zueinander parallelen vorderen und hinteren Begrenzungsflächen einer radialen Erweiterung des kreisbogenförmigen Bereichs parallel zueinander verlaufen, kann das darin einrastbare Gelenkteil ebenfalls zwei zueinander parallele Berandungsflächen aufweisen, welche an eben diesen Begrenzungsflächen der radialen Erweiterung anliegen und unmittelbar nach dem Einrastvorgang unverzüglich eine punktgenaue Arretierungsfunktion erfüllen können. Um andererseits ein verehentliches Verfehlen des möglichen Einrastortes zu vermeiden, können die einander zugewandten Kanten der radialen Erweiterung des kreisbogenförmigen Bereichs und/oder des darin einrastbaren Teils abgerundet sein oder anderweitig in azimutaler Richtung zurückweichen, wodurch der Mündungsberiech der radialen Erweiterung vergrößert, die jenem zugewandte Vorderseite des verstellbaren Gelenkteils dagegen verkleinert wird.

Um ein zuverlässiges und leichtgängiges Einrasten an einer gefundenen Arretierungsposition zu gewährleisten, sollten die zueinander parallelen vorderen und hinteren Begrenzungsflächen einer radialen Erweiterung des kreisbogenförmigen Bereichs zumindest in dessen Nähe keine Hinterschneidungen aufweisen oder keine das verstellbare Gelenkelement passgenau umgreifende Hinterschneidungen.

Stattdessen können eine, zwei, mehrere oder alle radialen Erweiterungen des kreisbogenförmigen Bereichs an ihrem dem kreisbogenförmigen Bereich abgewandten radialen Ende oder in dessen Nähe wenigstens eine Hinterschneidungs- oder Anlauffläche aufweisen, welche von dem verstellbaren Gelenkelement umgreifbar oder kontaktierbar ist. Diese dortigen Hinterschneidungs- oder Anlaufflächen dienen nicht mehr dem selbsttätigen Einrasten, sondern dem anschließenden manuellen Verriegeln.

Im Rahmen einer bevorzugten Ausführungsform ist die von dem verstellbaren Gelenkelement umgreif- oder kontaktierbare Hinterschneidungs- oder Anlauffläche an dem oder in der Nähe des Ende(s) einer, zweier, mehrerer oder aller, radialer Erweiterungen der kreisbogenförmigen Vertiefung zumindest bereichsweise eben. Eine solche, ebene Fläche eignet sich besonders für einen großflächigen, reibschlüssigen Kontakt mit einem Pendant an dem verstellbaren Gelenkelement.

Besondere Vorzüge bietet eine Weiterbildung der Erfindung, wonach die von dem verstellbaren Gelenkelement umgreif- oder kontaktierbare Hinterschneidungs- oder Anlauffläche an dem oder in der Nähe des Ende(s) einer, zweier, mehrerer oder aller, radialer Erweiterungen der kreisbogenförmigen Vertiefung jeweils nach außen gewandt ist, also der nächstgelegenen Stirnfläche des Gehäuses zugewandt ist. Sobald eine solche Fläche außen umgriffen wird, erfährt sie eine nach innen gerichtete Druckkraft. Sie kann dieser entweder selbst begegnen, wenn sie an einem bis zu einer spiegelbildlichen Kontaktfläche an ihrer gegenüber liegenden Stirnseite durchgehenden massiven Körper angeordnet ist, denn in diesem Fall halten die beiden radial nach innen gerichteten Druckkräfte einander die Waage und kompensieren sich gegenseitig. Oder hinter dieser Kontaktfläche befindet sich eine Art Einschnitt, worin dann ein Fortsatz an dem verstellbaren Gelenkteil eingreift und dann die erste Kontaktfläche an deren Rückseite abstützt.

Besondere Vorteile ergeben sich aus einer Konstruktion, wobei die von dem verstellbaren Gelenkelement umgreif- oder kontaktierbare Hinterschneidungs- oder Anlauffläche an dem oder in der Nähe des Ende(s) einer, zweier, mehrerer oder aller, radialer Erweiterungen der kreisbogenförmigen Vertiefung von der Dreh- oder Gelenkachse nicht lotrecht durchsetzt ist, sondern in Längsrichtung der betreffenden, radialen Erweiterung zu deren peripherem Ende hin nach außen strebt, also der nächstgelegenen Stirnfläche des Gehäuses zu. Dadurch kann durch eine Bewegung des verstellbaren Teils in Längsrichtung der betreffenden radialen Erweiterung ein Kontakt zu der Hinterschneidungs- oder Anlauffläche hergestellt und von dieser auch wieder gelöst werden.

Eine weitere Konstruktionsvorschrift besagt, dass das Lot an die von dem verstellbaren Gelenkelement umgreif- oder kontaktierbare Hinterschneidungs- oder Anlauffläche an dem oder in der Nähe des Ende(s) einer radialen Erweiterung der kreisbogenförmigen Vertiefung mit der Dreh- oder Gelenkachse einen Winkel einschließt, der gleich 2° ist oder größer, vorzugsweise gleich 5° oder größer, insbesondere gleich 10° oder größer. Ein zu kleiner Winkel würde zur Ausübung einer ausreichenden Anpresskraft gegen die keilförmig geneigte Hinterschneidungs- oder Anlauffläche eine relativ große Bewegung des verstellbaren Körpers in Längsrichtung der betreffenden Erweiterung erfordern.

Andererseits sollte beachtet werden, dass das Lot an die von dem verstellbaren Gelenkelement umgreif- oder kontaktierbare Hinterschneidungs- oder Anlauffläche an dem oder in der Nähe des Ende(s) einer radialen Erweiterung der kreisbogenförmigen Vertiefung mit der Dreh- oder Gelenkachse einen Winkel einschließt, der gleich 45° ist oder kleiner, vorzugsweise gleich 30° oder kleiner, insbesondere gleich 20° oder kleiner. Im Falle eines zu großen Winkels ergibt sich keine nennenswerte KraftVerstärkung, sondern eher nur eine Kraftumlenkung. Dadurch müsste die von einer Bedienperson aufzubringende Kraft betragsmäßig etwa der Arretierungskraft entsprechen, was einer jungen Mutter nicht zuzumuten ist.

Es liegt im Rahmen der Erfindung, dass an dem verstellbaren Gelenkelement im Bereich einer oder vorzugsweise beider Stirnflächen des Gehäuses je ein Pendant für eine dortige umgreif- oder kontaktierbare Hinterschneidungs- oder Anlauffläche vorgesehen ist. Diesem obliegt es, einen möglichst großflächigen Kontakt zu der Hinterschneidungs- oder Anlauffläche herzustellen. Dazu ist es förderlich, wenn das Pendant im Bereich seiner Kontaktfläche zu der Hinterschneidungs- oder Anlauffläche als möglichst naturgetreues Komplement zu letzterer gestaltet ist.

Diesem Gedanken folgend sieht die Erfindung weiter vor, dass ein Pendant des verstelbaren Gelenkelements als zu der betreffenden, davon umgreif- oder kontaktierbare Hinterschneidungs- oder Anlauffläche parallele Fläche ausgebildet ist. Durch eine Linearverschiebung des verstellbaren Teils treten die dazu vorgesehenen Kontaktflächen miteinander in großflächigen Kontakt.

Die Konstruktion erfährt eine vorteilhafte Kraft-Symmetrie, wenn an dem verstellbaren Gelenkteil im Bereich beider Stirnseiten des Gehäuses je eine zu einer dortigen Hinterschneidungs- oder Anlauffläche parallele Fläche vorgesehen ist. Dann kompensieren sich die axialen Kraftkomponenten von beiden Flächenkontakten und müssen nicht abgeleitet werden, wodurch sich die Konstruktion vereinfacht.

Bevorzugt kann die radiale Verstellung des verstellbaren Gelenkelements mittels einer auf Zug und Druck belastbaren Mechanik bewirkt werden, insbesondere mittels eines Gestänges. Mit Zug und Druck lassen sich entgegengesetzte Bewegungen übertragen, also die Verriegelungsbewegung einerseits und die umgekehrte Lösebewegung andererseits.

Um eine auf Zug und Druck belastbare Mechanik oder ein Gestänge vor äußeren Einflüssen zu schützen, sollten jene innerhalb eines hohl ausgebildeten Holms oder Seitenschenkels des Schiebebügels untergebracht werden. Innerhalb dieses Holms oder Hohlprofils kann die Verriegelungs- oder Lösebewegung weitergeleitet werden.

Insbesondere kann ein Element der auf Zug und Druck belastbaren Mechanik oder des Gestänges mit einem Betätigungselement im oberen Bereich des betreffenden Holms oder Seitenschenkels des Schiebebügels gekoppelt sein. Damit ist eine Betätigung der Verriegelung bequem vom Schiebebügel aus möglich.

Ein Element der auf Zug und Druck belastbaren Mechanik oder des Gestänges eignet sich neben einer manuellen Betätigung auch für eine automatische Einrastung. Zu diesem Zweck kann jenes über ein an dem betreffenden Holm oder Seitenschenkel des Schiebebügels abgestütztes Federelement vorgespannt sein. Dadurch wird automatisch der Einrastvorgang ausgelöst, sobald das verstellbare Teil einer radialen Erweiterung gegenübertritt. Die umgekehrte Ausrastbewegung muss dann manuell bewirkt werden, durch eine umgekehrte Verschiebung des eingerasteten Teils unter Spannung der Feder für die nächste Einrastbewegung.

Indem eine Vorderradstrebe, eine Hinterradstrebe und/oder ein Schenkel des Schiebebügels in einer gemeinsamen Ebene liegen, können sämtliche Kräfte innerhalb einer gemeinsamen Ebene übertragen werden, wodurch sich die Stabilität des Fahrgestells verbessert.

Es liegt im Rahmen der Erfindung, dass zum Lösen der Arretierung einer Gelenkverbindung des Fahrgestells, insbesondere zwischen dem Anschluss für eine Vorder- oder Hinterradstrebe einerseits und dem Gehäuse des Gelenks andererseits, ein zweiarmiger Hebel oder eine Wippe vorgesehen ist, der/die unter dem Einfluss wenigstens eines Federelements an einem Umfangsbereich eines verstellbaren Gelenkteils angedrückt wird und bei einer bestimmten Winkelstellung einen beweglichen Verriegelungsbolzen in Richtung zu der Achse des verstellbaren Gelenkteils hin zieht und damit die betreffende Vorder- oder Hinterradstrebe freigibt, so dass das Fahrgestell zusammengeklappt werden kann.

Weitere Vorteile ergeben sich dadurch, dass an einem Gelenk ein Adapter integriert oder festgelegt oder festlegbar ist, mit welchem verschiedene Aufsätze an dem Fahrgestell des Kinderwagens angebaut werden können, beispielsweise Babyschalen, Sport- oder Buggysitze, Liegeseitze ähnlich Tragetaschen, etc. Damit sind verschiedene Aufsätze gegeneinander austauschbar, die je nach fortschreitendem Alter des Kindes der jeweiligen Körpergröße angepast werden können.

Ein möglicher Aufsatz umfasst einen U-förmigen Bügel mit zwei durch einen Mittelsteg verbundenen Seitenschenkeln. An jenen können beispielsweise die Seitenteile eines Verdecks festgelegt sein, insbesondere über dessen ein Zusammen- und Auseinanderfalten ermöglichende Gelenke. Während die Rückenlehne des Aufsatzes vorzugsweise an dem Mittelsteg des obigen, U-förmigen Bügels festgelegt ist, soll das Verdeck ja über der Rückenlehne nach vorne schwenkbar sein. Dieses wird dabei unterstützt von mehreren U-förmig gebogenen Rippen, deren freie Enden in eigenen Gelenkpunkten zusammentreffen, die sich ihrerseits an je einem der beiden Seitenschenkel des U-förmigen Bügels befinden.

Schließlich entspricht es der Lehre der Erfindung, dass ein Aufsatz einen Faltrahmen für das Verdeck aufweist, der an einem Adapter des Fahrgestells festlegbar ist und mechanisch nicht mit weiteren Rahmenteilen der Sitzfläche des Aufsatzes verbunden ist, sondern die Rahmenteile der Sitzfläche des Aufsatzes hängen allenfalls über den (Bezugs-) Stoff des Aufsatzes an dem Faltrahmen für das Verdeck. Diese Methode einer kompletten Aufspaltung des Aufsatz-Rahmens in einen oberen Bereich zur Unterstützung der Rückenlehne und des Verdecks und einen davon vollkommen getrennten Teil zur Unterstützung der Sitzfläche hat den Vorteil, dass dadurch das Fahrgestell nur eine einzige Gelenkachse aufweist und somit problemlos auf kleinsten Raum zusammengefaltet werden kann.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

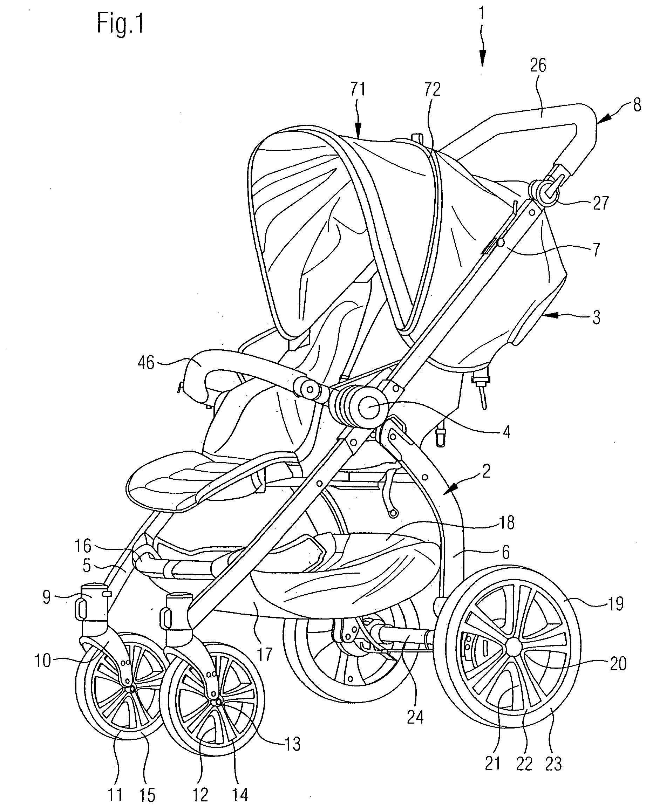

- Fig. 1: einen erfindungsgemäßen Kinderwagen in einer perspektivischen Ansicht, wobei das Kind mit Blick in Fahrtrichtung sitzt;

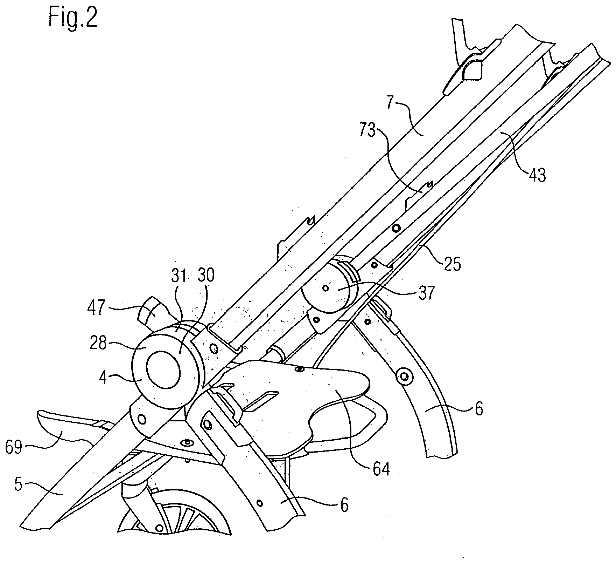

- Fig. 2: einen Ausschnitt des Kinderwagens nach Fig. 1 bei abgenommenem Aufsatz, ebenfalls in einer perspektivischen Ansicht;

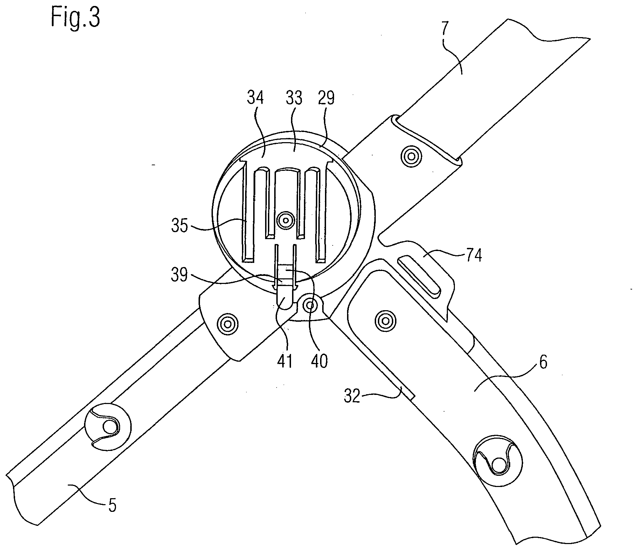

- Fig. 3: ein Detail um ein Schwenkgestell des Fahrgestells des Kinderwagens nach den Fig. 1 und 2 mit einer Befestigungsmöglichkeit für einen Aufsatz;
- Fig. 4: eine Seitenansicht auf einen Aufsatz zur Festlegung an dem Kinderwagen-Fahrgestell nach Fig. 3, teilweise abgebrochen dargestellt;
- Fig. 5: ein vorzugsweise flexibles Element eines an dem Kinderwagen nach den Fig. 1 bis 3 festlegbaren Aufsatzes;
- Fig. 6: ein anderes, vorzugsweise steifes, gegebenenfalls einstellbares Element eines an dem Kinderwagen nach den Fig. 1 bis 3 festlegbaren Aufsatzes;
- Fig. 7a: ein weiteres, vorzugsweise steifes Element eines an dem Kinderwagen nach den Fig. 1 bis 3 festlegbaren Aufsatzes in einer Vorderansicht;
- Fig. 7b: das steife Element aus Fig. 7a in einer perspektivischen Ansicht, teilweise abgebrochen;
- Fig. 7c: das steife Element aus den Fig. 7a und 7b in einer perspektivischen Sprengdarstellung;

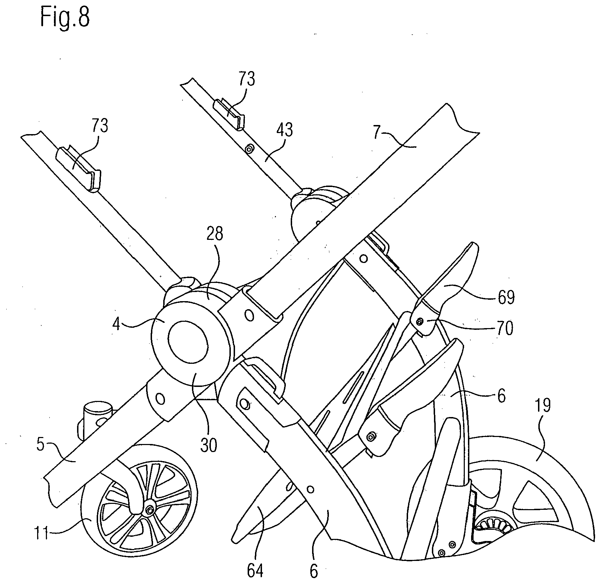

- Fig. 8: eine etwa der Fig. 2 entsprechende Ansicht auf Rahmenteile des Kinderwagens nach den Fig. 1 bis 3, wobei der Rahmen derart eingestellt ist, dass bei komplett daran montiertem Aufsatz das Kind nicht in Fahrtrichtung blickt, sondern Blickkontakt zu einer den Kinderwagen schiebenden Person hat;

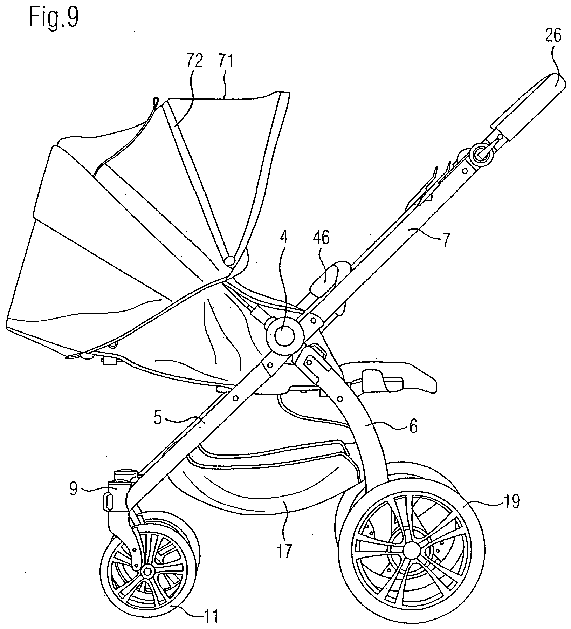

- Fig. 9: eine Seitenansicht des vollständig montierten Aufsatzes in der Position gemäß Fig. 8;
- Fig. 10: ein Gelenk des Kinderwagengestells nach den Fig. 1 bis 3 oder 8 und 9, mit zwei daran anschließenden Fahrgestellstreben und einem ebenfalls davon weg strebenden Holm des Schiebebügels;
- Fig. 11: eine Sprengdarstellung der Anordnung nach Fig. 10, so dass das Innenleben des Gelenks sowie des Schiebebügel-Holms erkennbar ist;
- Fig. 12: eine Seitenansicht auf die Anordnung nach Fig. 10, teilweise abgebrochen und teilweise im Schnitt, wobei das Gelenk in vollkommen arretiertem Zustand wiedergegeben ist;
- Fig. 13: das Gelenk aus Fig. 12 in einer vergrößerten Darstellung;
- Fig. 14: einen Schnitt durch das Gelenk nach Fig. 13 entlang der Linie XIV - XIV;
- Fig. 15: das Gelenk aus Fig. 12 in einer der Fig. 13 entsprechenden Darstellung, in zwar entriegeltem, jedoch noch eingerasteten Zustand;
- Fig. 16: eine der Fig. 14 entsprechende Darstellung des Gelenks in dem Zustand gemäß Fig. 15;
- Fig. 17: das Gelenk aus Fig. 12 in einer den Fig. 13 und 15 entsprechenden Darstellung, jedoch in nicht nur entriegeltem, sondern auch ausgerasteten Zustand;
- Fig. 18: eine den Fig. 14 und 16 entsprechende Darstellung des Gelenks in dem Zustand gemäß Fig. 17;
- Fig. 19: die Anordnung nach Fig. 17, wobei der zunächst ausgerastete Schiebebügel in die andere Betriebsposition verschwenkt ist, wo er wieder eingerastet ist, wobei sich die Schiebe- und damit Fahrtrichtung nun umkehrt;
- Fig. 20: die Anordnung nach Fig. 18, wobei der schiebebügel in der neuen Betriebsposition nun auch verriegelt ist;
- Fig. 21: das Gelenk der Anordnung nach Fig. 18 in einer vergrößerten Darstellung, in vollkommen verrigeltem Zustand;
- Fig. 22: die Anordnung nach Fig. 21, wobei der Schiebebügel nun wieder entriegelt ist;
- Fig. 23: die Anordnung nach Fig. 22, wobei der Schiebebügel nach vollständigem Ausrasten weiter geschwenkt ist bis in eine zusammengeklappte bzw. an eine Strebe des Fahrgestells herangefaltete Position, wobei andererseits der Rastmechanismus für die zweite, gegenüber dem Gehäuse des Gelenks verstellbare Fahrgestellstrebe ausgerastet ist;
- Fig. 24: das Fahrgestell in einer der Fig. 24 entsprechenden Ansicht, jedoch vollständig zusammengeklappt, so dass der Schiebebügel einerseits und eine Fahrgestellstrebe andererseits an die andere Fahrgestellstrebe herangefaltet sind; sowie
- Fig. 25: den gesamten Kinderwagen bei entsprechend Fig. 24 zusammengefaltetem Fahrgestell, ohne dass hierfür der Aufsatz zuvor demontiert werden müsste.

Der in der Zeichnung wiedergegebene Kinderwagen 1 ist derart konzipiert, dass er zusammen- und auch wieder auseinandergefaltet werden kann und dabei sowohl im auseinandergefalteten Zustand besonders bequem handhabbar ist als auch in zusammengefaltetem Zustand nur sehr wenig Platz beansprucht. Hierzu trägt die besondere Gestaltung des Fahrgestells 2 bei, aber auch die besondere Struktur des Aufsatzes 3.

Das Fahrgestell 2 ist symmetrisch aufgebaut bezüglich einer vertikalen, zur Fahrtrichtung parallelen Mittelebene. Zentrale Bestandteile des Fahrgestells 2 sind zwei jeweils seitlich angeordnete Gelenke 4, welche nicht direkt miteinander verbunden sind.

Beide Gelenke haben den gleichen Aufbau, sind jedoch vorzugsweise spiegelbildlich zueinander. Es gibt jeweils Anschlüsse oder Verbindungen zu wenigstens vier Elementen: Zu je zwei Streben des Fahrgestells 2, nämlich zu einer Vorderradstrebe 5 und einer Hinterradstrebe 6, zu dem Aufsatz 3, sowie zu je einem Seitenschenkel 7 eines Schiebebügels 8.

Bevorzugt führt jede Vorderradstrebe 5 zu je einem in einem Drehgelenk 9 um eine vertikale Achse lenkbaren und in einer gabelförmigen Aufnahme 10 drehbar gelagerten Vorderrad 11, dessen über Speichen 12 mit der Radnabe 13 verbundene Felge 14 mit einer Bereifung 15 versehen sein kann, beispielsweise aus Hartgummi. Da Radnabe 13 dank der gabelförmigen Aufnahme 10 gegenüber dem Drehgelenk 9 in horizontaler Richtung nach hinten versetzt ist, ergibt sich ein die automatische Lenkung des betreffenden Vorderrades 11 steuernder Nachlauf.

Vorzugsweise sind die Vorderradstreben 5 nicht miteinander verbunden oder nur durch einen etwa auf halber Höhe oder im unteren Bereich quer zur Fahrtrichtung verlaufende Strebe 16 zum Einhängen eines Transportkorbs oder einer flexiblen, muldenförmig zugeschnittenen Transportmatte 17, die außerdem noch an einer zweiten Strebe 18 eingehängt ist, die auf etwa der selben Höhe die beiden Hinterradstreben 6 miteinander verbindet.

Während die Vorderradstreben 5 vorzugsweise gerade gestreckt verlaufen oder allenfalls nach unten zu geringfügig nach innen gebogen sind, um den Kinderwagen 1 an engen Passagen besser steuern zu können, können die Hinterradstreben 6 zwar in einer zur Fahrtrichtung parallelen Ebene verlaufen, aber dabei einem bogenförmig geschwungenen Verlauf folgen, so dass sie im oberen Bereich von dem Gelenk 4 nach hinten unten weg streben, in ihrem unteren Bereich nahe der Hinterräder 19 dagegen nahezu senkrecht verlaufen und sich also in etwa vertikaler Richtung auf den hinteren Rädern 19 abstützen.

Die hinteren Räder 19 sind vorzugsweise ähnlich der Vorderräder 11 ausgebildet, also mit einer Radnabe 20, davon radial weg strebenden Speichen 21 und je einer von diesen getragenen Felge 22, worauf eine Bereifung 23 vorgesehen sein kann, insbesondere aus Hartgummi oder in Form von luftgefüllten Reifen, etc.

Wie bei den Vorderrädern 11, so ist es natürlich auch bei den Hinterrädern 19 möglich, dass diese mit Luftreifen versehen sein können.

Im Gegensatz zu den Vorderrädern 11 sind jedoch die Hinterräder 19 vorzugsweise nicht lenkbar. Stattdessen, sitzen sie auf einer gemeinsamen Achse 24, auf welcher sich die beiden Hinterradstreben 6 jeweils über Federungen abstützen, um den Fahrkomfort für ein Kind zu erhöhen.

Außerdem kann eine Feststellbremse vorgesehen sein, die sich beispielsweise über einen Bowdenzug 25 vom Griff 26 des Schiebebügels 8 aus arretieren und/oder lösen lässt. Natürlich kann zum Feststellen und/oder Lösen der Bremse auch ein Fußpedal od. dgl. vorgesehen sein.

Je nach Ausführungsform können die beiden Hinterräder 19 getrennt voneinander auf einer Achse 24 gelagert sein, wobei dann zwei Bremsvorrichtungen vorzusehen sind, oder sie sind mit einer drehbar gelagerten Achse 24 starr verbunden, so dass nur eine einzige, auf eben diese Achse 24 einwirkende Bremsvorrichtung benötigt wird.

Der Griff 256 des Schiebebügels 8 kann über Gelenke 276 seinerseits schenkbar mit den oberen Enden der Seitenschenkel 7 des Schiebebügels 8 verbunden sein.

Das Gehäuse 28 jedes Gelenks 4 ist bevorzugt mit der betreffenden Vorderradstrebe 5 verbunden, dieser gegenüber also nicht verdrehbar.

Das Gehäuse 28 des Gelenks 4 hat eine substantiell etwa zylindrische Struktur mit einer inneren, dem Aufsatz 3 zugewandten Stirnseite 29 und einer äußeren, diesem Aufsatz 3 abgewandten Stirnseite 30; dazwischen befindet sich eine Mantelfläche 31. Von dieser Mantelfläche 31 ragt seitlich ein Fortsatz 32 weg.

Während sich der Anschluss für den Schiebebügel 8 an der Mantelfläche 31 des zylindermantelförmigen Gehäuse-Hauptabschnitts befindet, strebt die Hinterradstrebe 6 von dem seitlichen Fortsatz 32 weg.

Der Anschluss 33 für den Aufsatz 3 befindet sich an der innenliegenden Stirnseite 29. Dieser Anschluss hat die Gestalt einer flachen Scheibe 34, worin sich wenigstens ein, vorzugsweise mehrere, insbesondere zwei oder drei oder vier oder fünf oder sechs jeweils zueinander parallele Schlitze 35 befinden.

Die Scheibe 34 ist mit ihrer Rückseite an der inneren Stirnseite 29 des Gelenk-Gehäuses 28 unverdrehbar und/oder unbeweglich festgelegt oder damit integriert, und zwar derart, dass die mit den Schlitzen 35 versehen Flachseiten 36 beider, an je einem Gelenk 4 angeordneter Scheiben 34 einander zugewandt sind.

Die Ausrichtung der Scheiben 34 ist derart, dass die Schlitze 35 allesamt in vertikaler Richtung oder in überwiegend vertikaler Richtung verlaufen. Diese Schlitze haben jeweils ein oberes und ein unteres Ende. Während die unteren Enden geschlossen sind, so dass dort der betreffende Schlitz 35 stumpf endet, sind sind die oberen Enden der Schlitze 35 offen, so dass von dort her Stegelemente 36 eingeschoben werden könne.

Dies ist deshalb wichtig, weil sowohl die Schlitze 35 als auch die dahinein schiebbaren Stege 36 keine rechteckigen Querschnitte aufweisen, sondern hinterschnitten sind, beispielsweise nach Art einer Schwalbenschwanzverbindung oder in dem sich die Querschnitte querschnittlich stufenartig verjüngen, so dass jeweils ein verbreiterter Stegabschnitt im Bereich einer freien Längsseite des Stegs 36 mit einem im Grund des nutförmigen Schlitzes 35 verbreiterten Schlitzabschnitt zusammenwirkt, während der zu seiner Mündung hin verjüngte Schlitzquerschnitt mit einem verjüngten Stegquerschnitt nahe dessen Grund zusammenwirkt. Daher lassen sich die Stege 36 nicht in horizontaler Richtung von den Schlitzen 35 lösen, sondern nur in vertikaler Richtung nach oben, unter Überwindung der entgegen gerichteten, nach unten wirkenden Gewichtskraft des Aufsatzes 3.

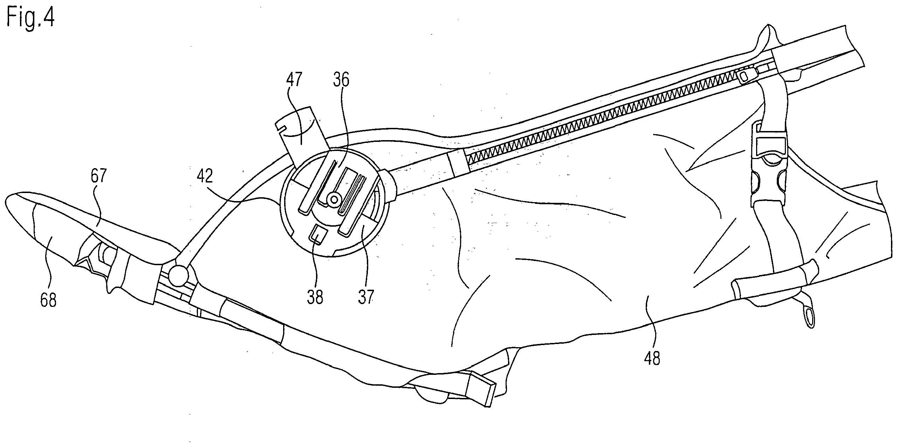

Wie man Fig. 4 entnehmen kann, sind die Stege 36 ihrerseits an einer Scheibe 37 angeordnet und dadurch zusammengefasst, welche den Aufsatz 3 trägt.

Ferner ist zu erkennen, dass die Anordnung der Schlitze 35 wie auch die Anordnung der darin einschiebbaren Stege 36 an der jeweiligen Scheibe 34, 37 symmetrisch zu einer Mittellinie ist. Dies hat zur Folge, dass der Aufsatz 3, welcher an beiden Seiten je eine Scheibe 37 aufweist, auch in um 180° um eine zu den Schlitzen 35 bzw. Stegen 36 parallele Achse gedrehtem Zustand an dem Fahrgestell 2 des Kinderwagens 1 einhängbar ist. Dies erlaubt es, den Aufsatz 3 sowohl in Fahrtrichtung als auch entgegen der Fahrtrichtung auf dem Fahrgestell 2 zu montieren.

Zwar ist bereits durch die Schwerkraft ein versehentliches Lösen des Aufsatzes 3 von dem Fahrgestell 2 so gut wie ausgeschlossen. Dennoch sieht die Erfindung zusätzlich noch eine Verriegelung vor, welche eine Ausnehmung oder Vertiefung 38 in einer der beiden Scheiben 34, 37 umfasst sowie einen Fortsatz 39 an der jeweils anderen Scheibe 37, 34, welcher zurückfedern kann, beispielsweise indem er an einer durch seitliche Schlitze von der umgebenden Scheibe 34, 37 teilweise freigeschnittenen Zunge 40 angeordnet ist.

Ist der Fortsatz 39 in die Vertiefung 38 eingerastet, hält ihn die federnde Zunge 40 in diesem Zustand und sorgt damit dafür, dass der Aufsatz 3 nicht mehr nach oben aus den Aufnahmeschlitzen 35 herausgehoben werden kann.

Um den Aufsatz 3 nun wieder von dem Fahrgestell 2 lösen zu können, ist an dem freien Ende der Zunge 40 eine über den Rand der betreffenden Scheibe 34, 37 überstehende Lasche 41 vorgesehen, beispielsweise angfeformt. Diese überstehende Lasche 41 ist auch bei aneinander liegenden Scheiben 34, 37 von außen zugänglich und kann von der jeweils anderen Scheibe weggebogen werden, bis der an der Fortsatz 39 der Zunge 40 von der Vertiefung 38 freikommt und also der Aufsatz 3 nach oben entnommen werden kann. Natürlich kann die Anordnung der Schlitze 35 und Stege 36 auch vertauscht sein, d.h., die fahrgestellseitigen Scheiben 34 verfügen dann über Stege, welche in Schlitzen an den aufsatzseitigen Scheiben 37 eingreifen.

Der Darstellung nach Fig. 4 ist weiter zu entnehmen, dass die aufsatzseitigen Scheiben 37 die selbe Umfangsgestalt aufweisen wie die fahrgestellseitigen Scheiben 34.

Vorzugsweise haben die aufsatzseitigen Scheiben 37 und/oder die fahrgestellseitigen Scheiben 34 eine kreisförmige Grundfläche, also eine kreisrunde bzw. zylindrische Mantelfläche 42.

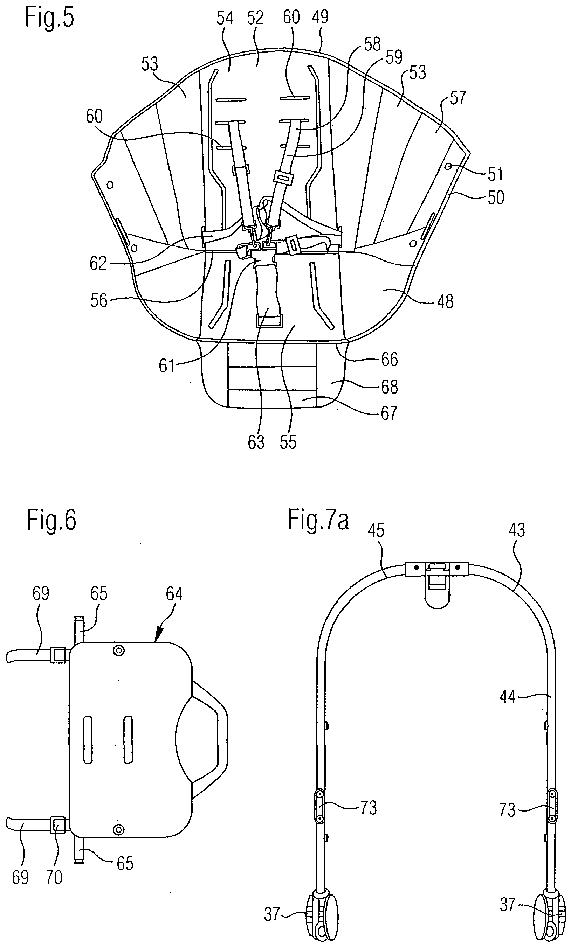

An den aufsatzseitigen Scheiben 37, insbesondere an deren Mantelflächen 42 ist wenigstens ein tragendes Element des Aufsatzes 3 befestigt, insbesondere ein Bügel 43 mit einem U-förmigen Verlauf, also mit zwei zueinander parallelen Seitenschenkeln 44, welche durch einen endseitigen Steg 45 an ihren den Scheiben 37 abgewandten Enden miteinander verbunden sind. Der Bügel 43 ist in den Fig. 7a bis 7c detailliert wiedergegeben.

Daraus ist erkennbar, dass die Seitenschenkel 44 des Bügels 43 radial von den Mantelflächen 42 der Scheiben 37 weg streben.

Andererseits verlaufen die Seitenschenkel 44 des Bügels 43 im Gebrauchszustand nicht parallel zu den Stegen 36 oder Schlitzen 35 der aufsatzseitigen Scheibe 37, sondern unter einem Winkel in der Größenordnung von etwa 45°. Dadurch ragt der Bügel 43 in eingestecktem und arretierten bzw. verriegelten Zustand unter einem ebensolchen Winkel von etwa 45° nach oben - entweder in oder entgegen der Fahrtrichtung, je nachdem, mit welcher Orientierung der Aufsatz 3 auf das Fahrgestell 2 aufgesteckt wurde.

Ferner kann mit den als Adapter dienenden Scheiben 37 des Aufsatzes 3 weiterhin ein das Kind am Aufstehen hindernder Beckenbügel 46 verbunden sein. Vorzugsweise ist ein solcher Beckenbügel 46 abnehmbar. Er kann auch einen U-förmigen Verlauf haben, so dass seine Schenkelenden in mit je einer Adapter-Scheibe 37 verbundene Hülsen 47 einsteckbar sind.

Bevorzugt erstreckt sich der Beckenbügel 46 im Gebrauchszustand nicht in der selben Ebene wie der Tragebügel 43 für den Aufsatz 3. Vielmehr können jene beiden Bügel 43, 46 einen Zwischenwinkel von etwa 60° bis 150° miteinander einschließen; im dargestellten Beispiel beträgt dieser Winkel etwa 100°. Dabei liegt die Richtung der Schlitze 35 oder Stege 35 an der betreffenden Scheibe 37 zwischen diesen beiden Bügelebenen, vorzugsweise etwa mittig dazwischen, wie Fig. 4 erkennen lässt.

In der Fig. 4 ist die Gebrauchsstellung der beiden Bügel 43, 47 wiedergegeben. Da sich diese Gebrauchsstellung jedoch für manche Situationen, beispielsweise für den Transport des Kinderwagens in einem Kofferraum od. dgl., als relativ sperrig erweist, ist erfindungsgemäß vorgesehen, dass beide Bügel 43, 37 unabhängig voneinander gegenüber den Scheiben 37 drehverstellbar sind. Insbesondere ist/sind ein oder vorzugsweise beide Bügel 43, 37 von der Gebrauchsstellung aus in beiden Drehrichtungen verschwenkbar, so dass unabhängig von der Stellung des Schiebebügels 8 jeweils eine platzsparende Konstellation der beiden Bügel 43, 47 etwa in Richtung des Schiebebügels 8 eingenommen werden kann.

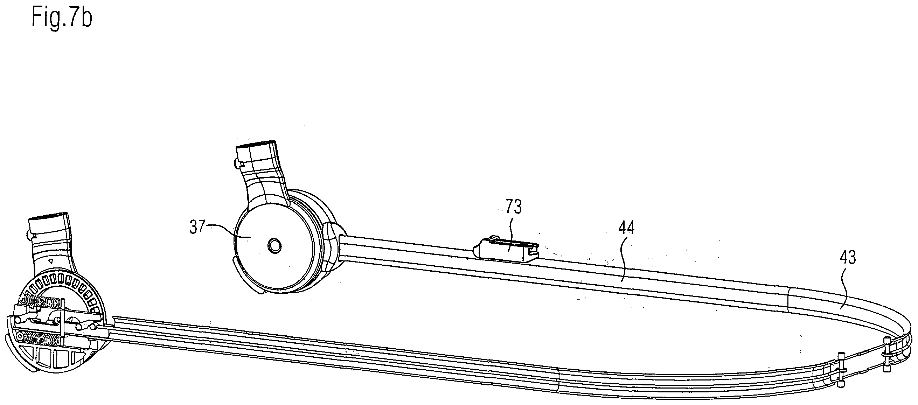

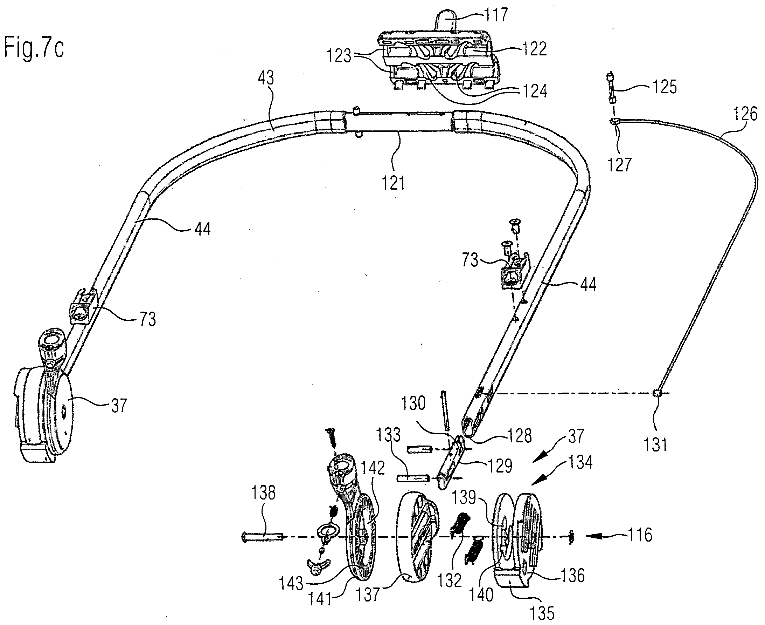

Die jenes leistenden Verriegelungsmechaniken 116 befinden sich jeweils in den aufsatzseitigen Scheiben 37 und sind in den Fig. 7b und 7c deutlich zu sehen; in Fig. 7b ist ferner der Tragbügel 43 seiner Länge nach aufgeschnitten dargestellt, so dass man auch dessen Innenleben erkennen kann. Die Verriegelungsmechaniken 116 werden gemeinsam gesteuert durch ein Betätigungselement 117 im Bereich des Stegs oder Scheitels 118 zwischen den beiden Seitenschenkeln 44 des Tragbügels 43. Das Betätigungselement 117 umfasst eine den Tragbügel 43 umschließende Hülse 119, vorzugsweise mit einer radial auskragenden Lasche 120. Die Hülse 119 ist in Längsrichtung des Tragbügels 43 in einem muldenartig vertieften Bereich 121 geführt und kann daher nur um den Tragbügel 43 herum geschwenkt werden.

An seiner Innenseite 122 weist die Hülse 119, die zum Zwecke der Montage in zwei Halbschalen 123 unterteilt ist, welche um den Tragbügel 43 herum geschlossen werden, zwei schraubenförmige Vertiefungen 124 auf, welche jedoch unterschiedlich orientiert sind. Die beiden Vertiefungen 124 bestehen jeweils aus zwei Abschnitten, von denen einer an der oberen Halbschale 123, der andere an der unteren Halbschale 123 angeordnet ist. Die Vertiefungen in der selben Halbschale folgen unterschiedlichen Verläufen - eine ist rechtsgängig, die andere linksgängig. Dabei sind die beiden Halbschalen 123 an ihren Innenseiten 122 vorzugsweise identisch zueinander ausgebildet. Insgesamt gibt es also insgesamt 4 den Tragbügel 43 auf jeweils 180° umgebende Schraubengänge 124, jeweils zwei an der oberen Halbschale 123 und zwei an der unteren Halbschale 123.

In diese beiden schraubenförmigen Vertiefungen 124 greift je ein Stift 125 ein, welcher den Tragbügel 43 quer zu dessen lokaler Längsrichtung durchsetzt und in einem dortigen Langloch 126 in eben dieser lokalen Längsrichtung - also quer zur Sitzrichtung - verschiebbar ist. Die Stifte 125 ragen jeweils mit ihren beiden Enden aus dem Langloch 126 heraus, und jedes Ende greift in je einen der vier Schraubengänge 124 der Hülse 119 ein. Die Folge ist, dass bei einem Verschwenken der Hülse 119 um etwa 180° vermittels der Schraubengänge 124 die beiden Stifte 125 in ihren Langlöchern 126 verschoben werden, und zwar jeweils in entgegengesetzten Richtungen, also entweder beide aufeinander zu oder beide voneinander weg.

An jedem der beiden Stifte 125 ist jeweils ein Zugdraht oder ein sonstiges Zugmittel 126 befestigt, beispielsweise mit einer Schlaufe oder Öse 127 an einem Ende des Zugmittels 126. Die beiden Zugmittel 126 erstrecken sich innerhalb des hohl ausgebildeten Tragbügels 43 von dem Betätigungselement 117 weg durch je einen Seitenschenkel 44 des Tragbügels 43 bis zu dessen freiem, offenen Ende 128 im Bereich eines Scheiben-Elements 37.

Die freien, offenen Enden 128 der Seitenschenkel 44 des Tragbügels 43 dienen als Linearführungen für je ein darin aufgenommenes und in deren Längsrichtung verschiebbares Steuerelement 129. Dieses ist mit einer Querbohrung 130 versehen, worin ein an dem freien Ende des Zugmittels 126 angeordnetes, beispielsweise zylindrisches Verdickungselement 131 eingreift, um eine von dem Betätigungselement 117 auf das Zugmittel 126 ausgeübte Zugkraft auf das Steuerelement 129 zu übertragen und dadurch jenes in das betreffende, offene Ende 128 eines Seitenschenkels 44 des Tragbügels 43 hinein zu ziehen. Die umgekehrte Bewegung erzeugen Federelemente 132, welche an das Steuerelement 129 gekoppelt sind und derart vorgespannt sind, dass sie bestrebt sind, jenes aus der Öffnung 128 herauszuziehen, sobald eine nachlassende Zugkraft seitens des Betätigungselements 117 dies erlaubt.

Das Steuerelement 129 wird ferner von wenigstens einem Querstift 133 durchsetzt, welcher der eigentlichen Drehverriegelung dient.

Die Scheibenelemente 37 bestehen jeweils aus einer Art Gehäuse 134, welches der Verbindung mit der Scheibe 34 dient, beispielsweise über die dortigen Schlitze 35, worin Stege 36 an dem Gehäuse 134 eingreifen können.

Das Gehäuse 134 umfasst zwei durch einen Steg 135 miteinander verbundene Platten 136, zwischen denen ein scheibenförmiges Element 137 um eine Drehachse 138 drehbar aufgenommen ist, wobei die Platten 136 des Gehäuses 134 von der Drehachse 138 lotrecht durchsetzt werden.

Das Steuerelement 129 ragt in jeder Schiebestellung teilweise in eine Art Kanal innerhalb des scheibenförmigen Elements 137 hinein und teilt dadurch jenem seine Schwenkstellung um die Drehachse 138 mit. Dabei ragt der Querstift 133 aus dem scheibenförmigen Element 137 zumindest an seiner dem gestellseitigen Adapter 34 abgewandten Seite heraus. In der betreffenden Scheibe 136 ist eine bogenförmige Vertiefung 139 eingearbeitet, welche von dem Querstift 133 durchgriffen wird. In dem Rand dieser bogenförmigen Vertiefung 139 befindet sich wenigstens eine Einrasterweiterung 140, in die der Querstift 133 bei der gewünschten Gebrauchs-Schwenkstellung hinein gleiten kann, unter dem Einfluss der Federelemente 132.

Ferner ist für den Anschluss des Spielbügels 47 an dem Scheiben-Element 37 dort ein weiteres, ringförmiges Element 141 vorgesehen, welches sich an der Außenseite der inneren Scheibe 135 - parallel zu jenem - erstreckt. Dieses ist ebenfalls verdrehbar auf der Drehachse 139 gehalten und weist an seiner Innenseite eine felgenartig umlaufende, zu der Scheibe 139 hin vorspringenden Rand 142 auf, der seinerseits an seiner radial innen liegenden Seite an einer Stelle eine nach außen gerichtete, muldenförmige Vertiefung 143 als Einrasterweiterung aufweist.

Da der innere Rand 142 einen größeren Radius aufweist als der radial äußere Rand der bogenförmigen Vertiefung 139 in der Scheibe 136, wird beim Ausheben des Querstifts 133 aus den Einrast-Vertiefungen 139, 143 zuerst der Spielbügel 47 frei, erst danach der Tragbügel 43. Umgekehrt rastet zuerst der Tragbügel 43 ein, dann der Spielbügel 47.

An den beiden Seitenschenkeln 44 des Tragbügels 43 wie auch an dessen Steg 45 wird die eigentliche Sitzmulde 48 des Aufsatzes 3 befestigt.

Die Sitzmulde 48 ist in Fig. 5 dargestellt und besteht überwiegend aus einem flexiblen Stoff, passt sich also der Form und Haltung des Kindes jeweils optimal an. Sie ist in ihrem oberen Bereich 49 an dem Steg 45 und im Bereich ihrer beiden Seitenränder 50 an je einem der beiden Seitenschenkel 44 des Tragbügels 43 festgelegt, beispielsweise indem sie lappenartige Bereiche oder Fortsätze aufweist, welche um den betreffenden Holm 44, 45 des Tragbügels 43 herum geschlungen werden und sodann mit sich selbst verbunden werden, beispielsweise mittels Druckknöpfen 51.

Wie man der Fig. 5 weiter entnehmen kann, untergliedert sich die Sitzmulde 48 in einen zentralen Mittelbereich 52 sowie in zwei seitlich daran anschließende Randbereiche 53.

Der mittlere Bereich 52 untergliedert sich in einen oberen Bereich, welcher dem Kind als Rückenlehne 54 dient, und in einen unteren Bereich, der als Sitzfläche 55 gedacht ist. Vorzugsweise ist die Sitzfläche 55 kleiner als die Rückenlehne 54, obwohl beide etwa die selbe Breite haben.

Auf Höhe des Übergangsbereichs 56 zwischen der Sitzfläche 55 und der Rückenlehne 54 können in den Randbereichen 53 jeweils zwickelförmig sich nach außen erweiternde Bereiche ausgespart sein, so dass nach Zusammennähen der Ränder des ausgeschnittenen Bereichs sich mehr oder weniger selbsttätige die Form einer Sitzmulde 48 ergibt. Die Randbereiche 53 fungieren dabei als Armlehnen oder Seitenstützen 57.

Im Mittelbereich 52 können ferner Gurte 58 zum Zurückhalten eines Kindes vorgesehen sein; beispielsweise können Schultergurte 59 an Schlitzen 60 in der Rückenlehne 54 nach vorne austreten und über ein Gurtschloss 61 mit Beckengurten 62 oder einem zentral durch den Schritt laufenden Untergurt 63 verbunden werden.

Damit das Kind nicht in der Sitzmulde wie in einer Hängematte sitzt, ist unterhalb der Sitzfläche 55 eine flächige Sitzflächenstütze 64 aus einem festen Material vorgesehen. Diese wird vorzugsweise an den in Blickrichtung des Kindes jeweils vorderen Fahrgestellstreben 5, 6 festgelegt, beispielsweise indem seitlich auskragende Fortsätze 65 in an den Fahrgestellstreben 5, 6 festgelegten Muffen od. dgl. eingesteckt oder eingesetzt werden.

Die Sitzmulde 48 liegt mit ihrer Sitzfläche 55 nur lose auf der plattenförmigen Sitzflächenstütze 64 auf. Insbesondere ist die Sitzflächenstütze 64 nicht mit dem Tragebügel 43 verbunden.

Vorne an der Vorderkante 66 der Sitzfläche 55 hängt eine Unterschenkellasche 67, vorzugsweise ebenfalls aus einem flexiblen Stoff. Diese kann an ihrer Unterseite über zwei seitliche Taschen 68 verfügen, welche sich an den Seitenkanten der Unterschenkellasche 67 entlang erstrecken und hinten offen sind, also im Bereich der Vorderkante 66.

Diese Taschen 68 dienen zur Aufnahme je einer Unterschenkelstütze 69.

Jede derartige Unterschenkelstütze 69 hat die Form eines kurzen Stabs oder Stummels, der in seinem hinteren Bereich über ein dortiges Gelenk 70 mit der festen Sitzflächenstütze 64 verbunden ist.

Sobald die Unterschenkelstützen 69 in die Taschen 68 der Unterschenkellasche 67 eingesteckt sind, bestimmen sie deren Gestalt: Sind die Unterschenkelstützen 69 etwa horizontal in Blickrichtung nach vorne gerichtet, wie in Fig. 4 zu sehen, spannt sich zwischen diesen die Unterschenkellasche 67 etwa wie ein horizontales Segel auf und kann einem kleinen Kind zur Ablage seiner Unterschenkel dienen.

Bei größeren Kindern werden die Unterschenkelstützen 69 an ihren Gelenken 70 etwa vertikal nach unten gebogen und nehmen die Unterschenkellasche 67 dabei mit. Nun kann ein größeres Kind auf dem Aufsatz 3 Platz nehmen und in der gewohnten Sitzposition die Unterschenkel nach unten stellen.

Eine weitere Besonderheit des Aufsatzes 3 ist ein Verdeck 71. Dieses besteht ebenfalls aus einem flexiblen Stoff, der auf einer Mehrzahl von rippenförmig den Sitz überspannenden Verdeckbügeln 72 aufgespannt ist.

Die Verdeckbügel 72 folgen jeweils einem U-förmigen Verlauf. Die Enden ihrer Seitenschenkel treffen sich an jeder Seite des Kinderwagens 1 an je einem Gelenk, welches an vorbereiteten Befestigungsbereichen 73 der Seitenschenkel 44 des Tragbügels 43 festlegbar sind.

Da die somit die meisten Bestandteile des Aufsatzes über den Tragbügel 43 mit der Adapter-Scheibe 37 verbunden sind, können sie bei Bedarf als ganzes abgenommen und in umgekehrter Blickrichtung wieder aufgesteckt werden.

Daneben muss nur noch die feste Sitzflächenstütze 64, welche bevorzugt mit den Unterschenkelstützen 69 zu einer Baueinheit integriert ist, demontiert und anschließend an den jeweils in Blickrichtung vorderen Fahrgestellstreben 5, 6 wieder befestigt werden.

Dabei muss allerdings das Kind vorübergehend aus dem Sitz aufstehen oder entnommen werden, da der Umbau ansonsten etwas anstrengende sein könnte. Will eine Mutter nur kurzfristig die Blickrichtung ihres Kindes umwechseln, beispielsweise weil dieses ohne Blickkontakt zur Mutter heftig schreit, so bietet der erfindungsgemäße Kinderwagen überdies die Möglichkeit, anstelle des Aufsatzes 3 den Schiebebügel 8 in eine andere Position zu schwenken, so dass nicht die Blickrichtung des Kindes, sondern die Schieberichtung der Mutter vertauscht wird.

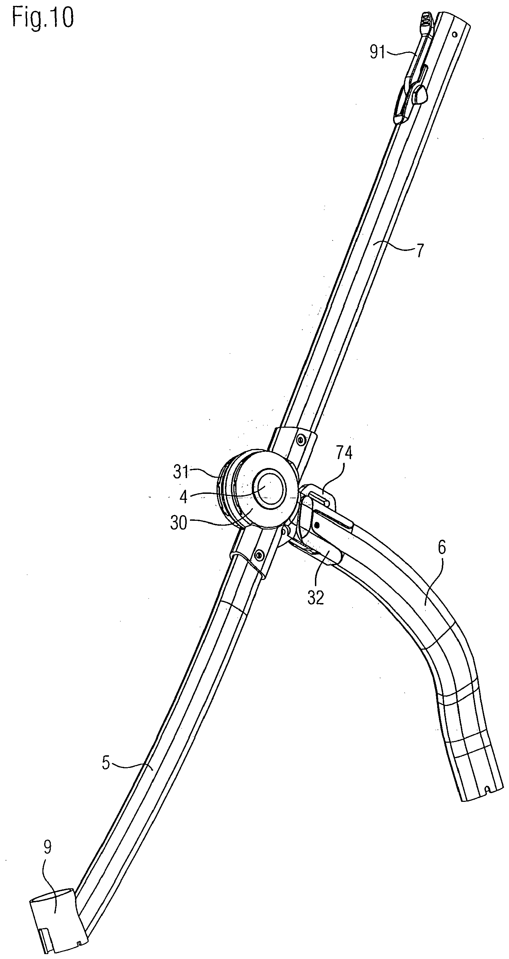

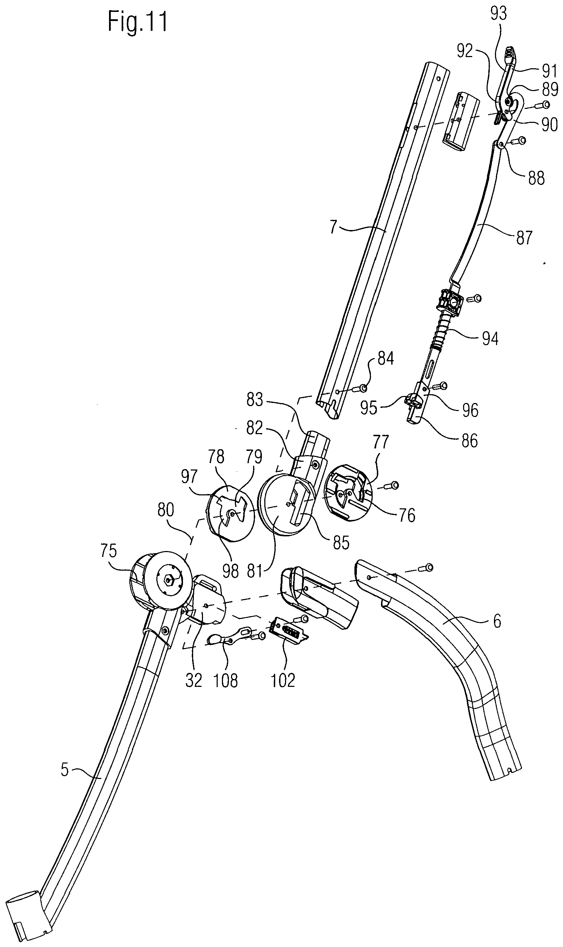

Dies leistet das erfindungsgemäße Gelenk 4. Dieses ist in den Fig. 10 ff. deutlicher dargestellt. Insbesondere aus Fig. 11 erkennt man dessen inneren Aufbau.

Bei der dargestellten Ausführungform ist das Gehäuse 28 eines Gelenks 4 an einer Strebe des Fahrgestells 2 festgelegt, in der Zeichnung an einer Vorderradstrebe 5.

An dem Gehäuse 28 erkennt man einen muffenartigen Anschluss für die Vorderradstrebe 5. Mit diesem Anschluss kann das Gehäuse 28 des Gelenks integriert sein, beispielsweise in einem gemeinsamen Arbeitsgang spritzgusstechnisch hergestellt.

Das Gehäuse 28 umfasst einen Teil der Mantelfläche 31 sowie zwei Stirnseiten 29, 30. Außerdem ist an der Mantelfläche 31 ein Fortsatz 32 zum Anlenken der Hinterradstrebe 6 angeformt. Ferner kann damit eine Sicherungsöse 74 integriert sein, womit der Kinderwagen beispielsweise in einem Zug od. dgl. mittels eines Gurtes verankert werden kann.

Wie man weiter erkennen kann, sind an den Innenseiten der beiden Stirnflächen 29, 30 jeweils rippenförmige Erhebungen 75 angeformt.

Pendants dazu in Form von rillenförmigen Vertiefungen 76 befinden sich an den Außenseiten 77 zweier innerer Gelenkplatten 78, welche von innen her an den Gehäuse-Stirnplatten 29, 30 derart verankerbar sind, dass die Rippen 75 in die Rillen 76 eingreifen und dadurch eine Relativverdrehung ausgeschlossen ist. Natürlich kann die Position der Rippen 75 und Rillen 76 auch vertauscht sein. Die Gelenkplatten 78 sind nur aus herstellungstechnischen Gründen von den Gehäuse-Stirnplatten 29, 30 getrennt hergestellt, damit sie sich leichter entformen lassen. Durch die Rippen 75 und Rillen 76 wird jedoch je eine Gelenkplatte 78 starr mit einer Gehäuse-Stirnplatte 29, 30 unverdrehbar und infolge der jene gemeinsam durchsetzenden Gelenkachse auch unverschiebbar verbunden. Die Rippen 75 und Rillen 76 können jeweils einen schwalbenschwanzförmig hinterschnittenen Querschnitt aufweisen, damit die Gelenkplatten 78 auch in axialer Richtung starr mit den Gehäusestirnplatten 29, 30 verbunden sind.

Wie man weiter sieht, ist in jeder Gelenkplatte 78 je eine fensterartige Ausnehmung 79 vorgesehen. Die fensterartigen Ausnehmungen 79 beider Gelenkplatten 78 sind deckungsgleich. Überhaupt sind die Gelenkplatten 78 spiegelbildlich zu einer von der Drehachse 80 des Gelenks 4 lotrecht durchsetzten Mittelebene des Gelenks 4.

Die beiden Gelenkplatten 78 sind voneinander beabstandet und nehmen zwischen sich ein weiteres, scheibenförmiges Teil 81 auf, welches über einen Anschluss 82 für einen Seitenschenkel 7 des Schiebebügels 8 verfügt, beispielsweise mit einem Fortsatz 83, der beim Zusammenstecken mit dem Schiebebügel 8 in das offene Ende eines hohlprofilförmigen Seitenschenkels 7 eingreift. Durch einen Querstift oder eine quer durch den Fortsatz 83 und den Seitenschenkel 7 hindurchgreifende Schraube 84 werden diese Teile miteinander verbunden.

Auch das scheibenförmige Teil 81 verfügt über ein zwischen seinen beiden Grundflächen hindurchgehendes Fenster 85, welches außerdem mit einem Hohlraum in dem Fortsatz 83 kommuniziert.

In dem Fenster 85 ist ein Verriegelungskörper 86 verschiebbar geführt.

Der Verriegelungskörper 86 ist an seinem dem Fortsatz 83 zugewandten Ende mit einem Gestänge 87 integriert oder verbunden, welches sich innerhalb des hohlen Seitenschenkels 7 des Schiebebügels 8 nach oben erstreckt und über ein oder mehrere Verbindungsgelenke 88, 89 und -hebel 90 mit einem Betätigungshebel 91 gekoppelt ist.

Der Betätigungshebel 91 ist seinerseits an einer quer zur Fahrtrichtung verlaufenden Schwenkachse 92 schwenkbar gelagert.

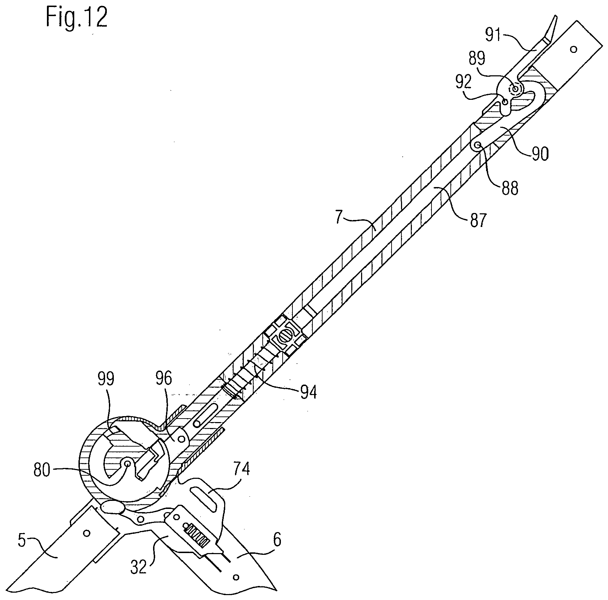

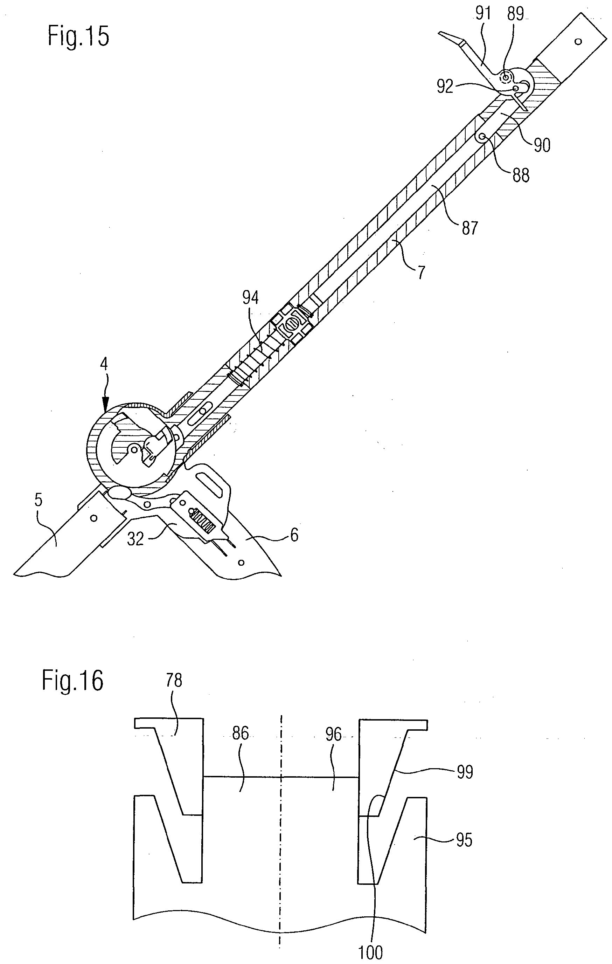

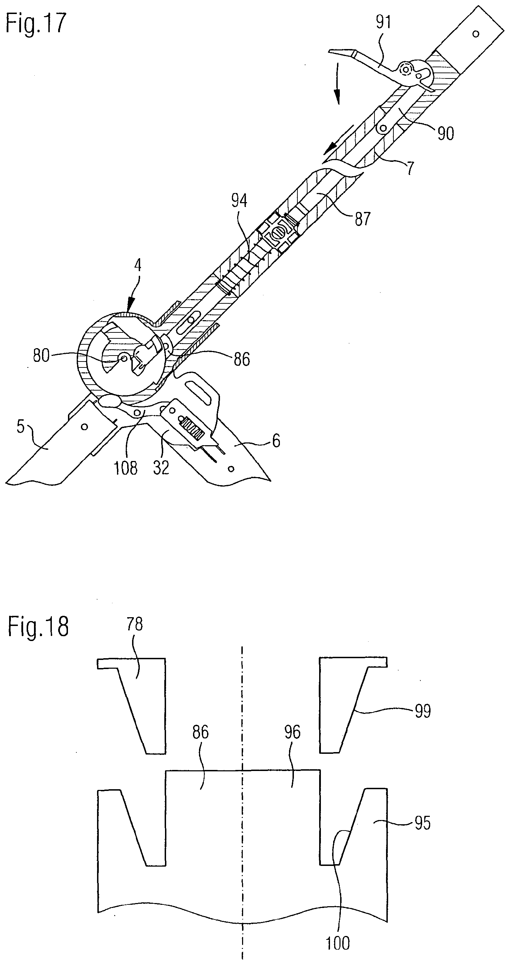

Im vorliegenden Fall handelt es sich dabei um einen einarmigen Hebel, wobei sowohl der Betätigungsgriff 93 als auch das erste Verbindungsgelenk 89 zu einem Verbindungshebel 90 an der selben Seite der Schwenkachse 92 angeordnet sind. Wird demnach der Betätigungsgriff 93 nach oben zum Griff 26 des Schiebebügels 8 hin geschwenkt, wie dies zum Beispiel in Fig. 12 dargestellt ist, so bewegt sich das Gestänge 87 und damit auch der Verriegelungskörper 86 in Richtung zu dem Griff 26 des Schiebebügels 8 hin, also nach oben. Wird dagegen der Betätigungsgriff 93 nach unten geschwenkt, wie in den Fig. 15 oder 17 zu sehen, so bewegt sich das Gestänge 87 und damit auch der Verriegelungskörper 86 zu dem Gelenk 4 hin, also nach unten.

Eine mit dem Gestänge 87 gekoppelte Feder 94, insbesondere eine jenes umgebende Schraubenfeder, stützt sich andererseits an dem Holm des Seitenschenkels 7 des Schiebebügels 8 ab und ist aufgrund einer Vorspannung bestrebt, das Gestänge 87 mitsamt dem Verriegelungshebel 86 nach oben zu drücken, sofern der Betätigungsgriff 93 dies zulässt.

Das Fenster 85 in dem scheibenförmigen Teil 81 weist eine überwiegende Längserstreckung in Richtung des Seitenschenkels 7 des Schiebebügels 8 auf und erlaubt damit dem Verriegelungskörper 86 unter dem Einfluss der Feder 94 und des Betätigungsgriffs 93, sich innerhalb des Fensters 85 in Längsrichtung des Gestänges 87 zu verschieben. Eine Verdrehung um die Drehachse 80 des Gelenks 4 ist dagegen nicht oder kaum möglich.

Anders verhält es sich mit den Fenstern 79 in den beiden Gelenkplatten 78. Diese haben überwiegend eine bogenförmige Gestalt bzw. einen kreisbogenförmigen zu der Drehachse 80 des Gelenks 4 konzentrischen Verlauf. Darin finden seitlich auskragende Bereiche 95 des Verriegelungskörpers 86 Platz, während dessen Korpus 96 sich überwiegend oder ausschließlich innerhalb des Fensters 85 befindet. Dieses Fenster 85 übernimmt daher eine Führungsfunktion für den Verriegelungskörper 86 im Rahmen des zentralen, scheibenförmigen Gelenkteils 81.

Demgegenüber bestimmen die Fenster 79 in den beiden Gelenkplatten 78, ob sich der Verriegelungskörper 86 gemeinsam mit dem scheibenförmigen Gelenkteil 81 in Umfangsrichtung der bogenförmigen Fenster 79 verstellen lässt.

Denn die bogenförmigen Fenster 79 verfügen neben rein bogenförmigen Randabschnitten auch über ein oder vorzugsweise zwei radiale Erweiterungen 97, welche sich unter verschiedenen Winkeln von dem bogenförmigen Fensterbereich 98 nach außen erstrecken.

Befinden sich die seitlich auskragenden Bereiche 95 des Verriegelungskörpers 86 innerhalb einer solchen rdialen Erweiterung 97, so ist eine Verstellung des Veriegelungskörpers 86 und damit des scheibenförmigen Gelenkteils 82 und des gesamten Schiebebügels 8 in Umfangsrichtung um die Drehachse 80 nicht möglich. Greifen die seitlich auskragenden Bereiche 95 des Verriegelungskörpers 86 dagegen nicht in irgendewelche radialen Erweiterungen 97 ein, sondern befinden sich in dem bogenförmigen Fensterbereich 98, ist dagegen eine Bewegung innerhalb diese Fensterbereichs 98 und damit ein Verschwenken des Schiebebügels 8 möglich.

Die seitlichen Fortsätze 95 werden zusammen mit dem Verriegelungskörper 86 selbst von der Feder 94 nach oben bewegt, wenn sie genau einer radialen Erweiterung 97 des Fensters 79 gegenüber stehen. Dies ist eine automatische Einrastfunktion, welche einer Bedienperson anzeigt, dass nun dir richtige Stellung des Schiebebügels 8 gefunden ist.

Allerdings hat die Feder 94 nicht genügend Kraft, um das Gelenk 4 in dieser Position steif zu blockieren. Dazu ist vielmehr erforderlich, dass nun die Bedienperson den Betätigungshebel 91 manuell ganz nach oben zieht. Damit wird der Verrigelungskörper 86 im Rahmen seines Speilraums innerhalb der Fenster 79, 85 ganz nach oben bzw. - im Hinblick auf die Drehachse 80 - ganz nach radial außen gezogen.

Dabei werden die seitlich auskragenden Bereiche 95 des Verriegelungskörpers 86 vollständig in die betreffende radiale Erweiterung 97 des Fensters 79 hinein bewegt.

Damit hierbei nicht durch Fertigungstoleranzen des Gestänges 86, 87, 90 gegenüber dem Holm 7 die auskragenden Bereiche 95 des Verriegelungskörpers 86 zu weit in diese Erweiterungen 97 des Fensters 79 hinein bewegt werden, wodurch die seitlichen Gelenklatten 78 beschädigt oder zerstört werden könnten, weist wenigstens eine Stange 87 des Gestänges 86, 87, 90 nicht eine ebene Gestalt auf, sondern folgt einem leicht gewölbten, bogenförmigen Verlauf, wie dies in Fig. 11 zu sehen ist. Dadurch erhält das Gestänge 86, 87, 90 in seiner Längsrichtung eine Art Federungsmöglichkeit, welche es erlaubt, dass das vorderste bzw. unterste Teil 86 mitsamt seiner seitlich auskragenden Bereiche 95 in dem gewünschten Arretierungzustand verharren kann, selbst wenn der Betätigungshebel 93 noch nicht seine Endposition erreicht hat. Den Längenunterschied fängt die gewölbte und federnd biegsame Stange 87 des Gestänges 86, 87, 90 auf, indem diese sich nötigenfalls gerade biegt und dadurch länger wird. Dadurch erhöht sich zwar die zwischen den auskragenden Bereichen 95 des Verrielungskörpers 86 und den Erweiterungen 97 der Fenster 79 in den seitlichen Scheiben 78 wirkende Klemmkraft, jedoch in einem nur mäßigen Umfang, nämlich um die Federkraft der elastisch verbogenen Stange 87. Diesen mäßigen Kraftanstieg kann die Mechanik ohne Beschädigung oder gar Zerstörung ertragen. Die gebogene Stange 87 kann ähnlich wie ein "("oder wie ein ")" nach innen oder nach außen durchgebogen sein, oder sogar ähnlich einem "S" einen vorzugsweise etwa mittigen Wendepunkt aufweisen, mit zwei daran anschließenden Durchbiegungen in entgegengesetzten Richtungen.

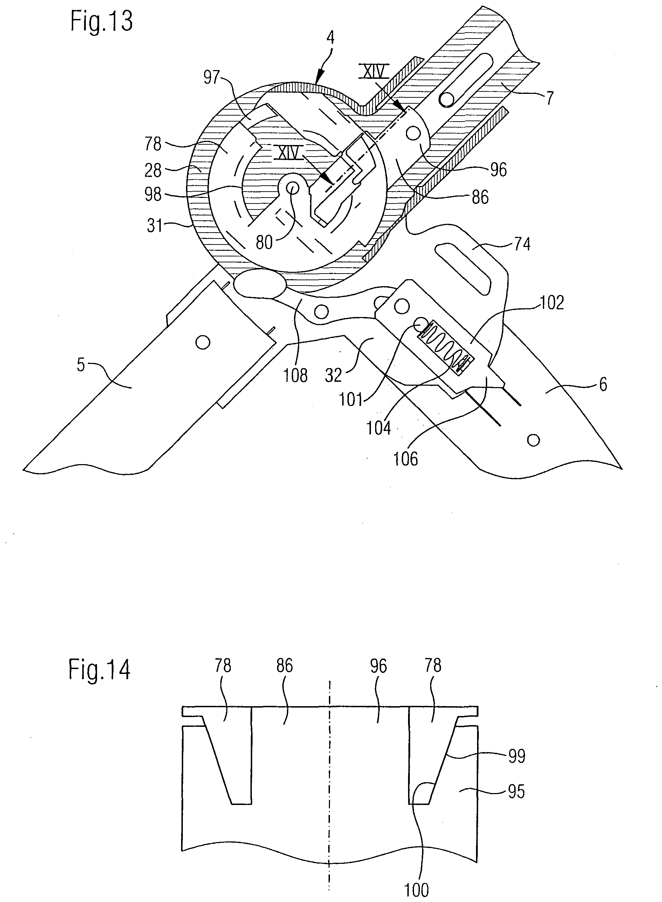

Wie die Fig. 14, 16 und 18 zeigen, finden die radial auskragenden Bereiche 95 dabei sich allmählich verengende Schlitzquerschnitte vor und gelangen daher schließlich zur Anlage an geneigt verlaufenden Kontaktflächen 99 am Rand einer Erweiterung 97 eines Fensters 79 im Bereich des freien Endes der radialen Erweiterung 97. Durch manuelles, kräftiges Anziehen werden dadurch die beiden Gelenplatten 78 reibschlüssig und damit maximal steif an Pendants 100 zu den Kontaktflächen 99 im Bereich der seitlich auskragenden Bereiche 95 gezogen. Das Gelenk ist eingerastet und verriegelt, wie in den Fig. 13 und 14 dargestellt. Dieser Zustand bleibt nicht zuletzt auch deshlab aufrechterhalten, weil nun der Betätigungsgriff 93 gänzlich nach oben geschwenkt ist, so dass nun das oberste Verbindungsgelenk 89 und die Schwenkachse 92 des Betätigungshebels 91 etwa in Längsrichtung des Gestänges 87 hintereinander liegen. Dadurch wird der Betätigungshebel 91 gegenüber jeglicher Zug- oder Druckkraft innerhalb des Gestänges 87 blockiert.

Man erkennt nun in Fig. 15 und 16, dass nach dem Entriegeln zwar die Kontaktflächen 99 und 100 voneinander gelöst sind, aber unter dem Einfluss der Feder 94 bleibt - bei etwa um 90° gegenüber der Arretierungsposition herabgeschwenktem Betätigungsgriff 93 - noch immer die seitlich auskragenden bereiche 95 des Verriegelungskörpers 86 die radialen Erweiterungen 97 der Fenster 79 eingreifen und also ein Verschwenken des Schiebebügels 8 noch immer nicht möglich ist. Da in diesem Zustand die das Verbindungslinie zwischen dem obersten Verbindungsgelenk 89 und der Schwenkachse 92 des Betätigungshebels 91 etwa quer zur Längsrichtung des Gestänges 87 orientiert ist, gibt der Betätigungshebel 91 jeder Zug- oder Druckbeanspruchung innerhalb des Gestänges 87 nach und überlässt also der Feder 94 die Steuerung des Verriegelungskörpers 86.

Wird nun - wie dies in den Fig. 17 und 18 zu sehen ist - der Betätigungsgriff 93 manuell herabgedrückt, so wird die Feder 94 überwunden und das Gestänge 87 schiebt den Verriegelungskörper 86 weiter in das Gelenk 4 hinein, bis die seitlich auskragenden Bereiche 95 des Verriegelungskörpers 86 vollständig aus der betreffenden radialen Erweiterung 97 herausgeschoben sind.

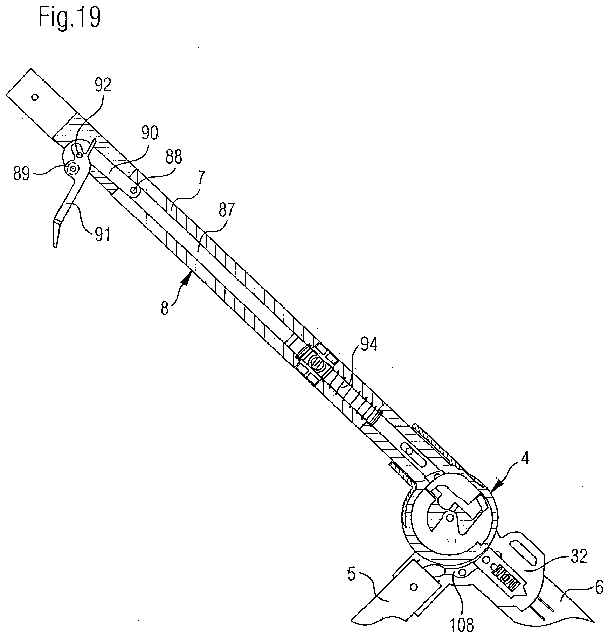

Nun ist der Verriegelungskörper 86 samt seiner seitlich auskragenden Bereiche 95 innerhalb des bogenförmigen Fensterbereichs 98 frei beweglich und der Schiebebügel 8 kann von der Position nach Fig. 17 beispielsweise in die Position nach Fig. 19 verschwenkt werden, wo wiederum ein Einrasten an einer anderen radialen Erweiterung 97 möglich ist.

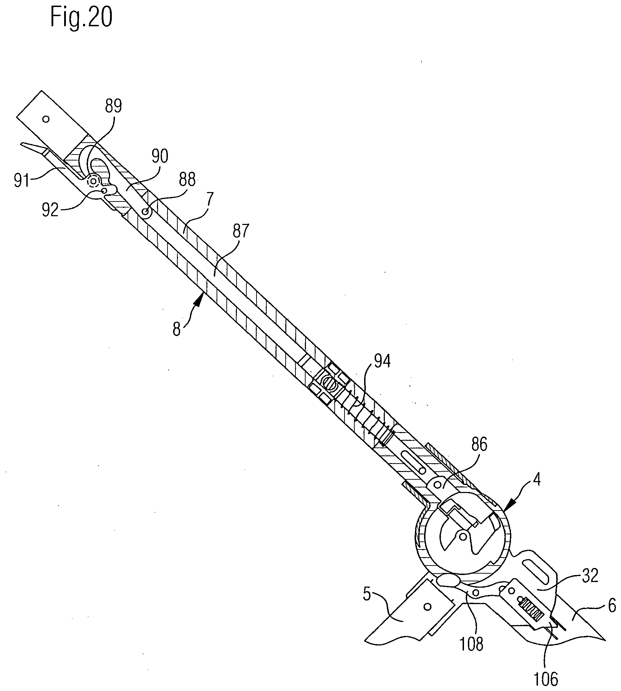

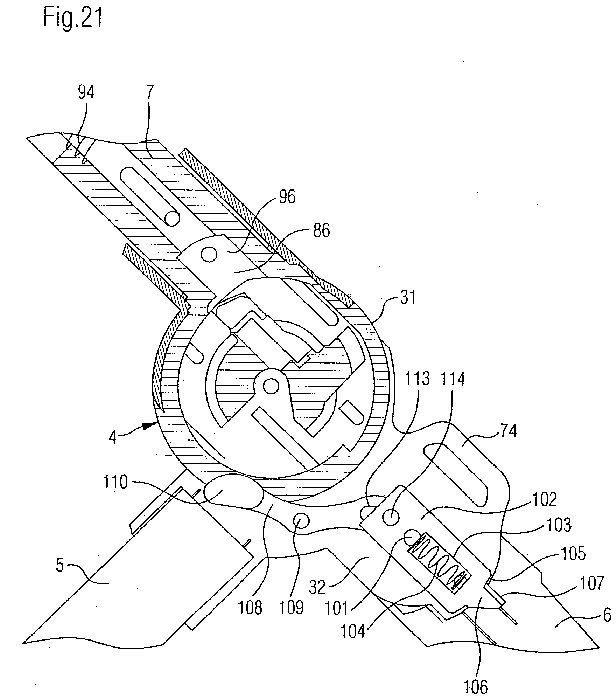

Wird diese Position des Schiebebügels 8 verriegelt, indem der Betätigungsgriff 93 ganz nach oben gezogen wird, wie dies in Fig. 20 und 21 zu sehen ist, so kann der Kinderwagen 1 nun in umgekehrter Richtung geschoben werden.

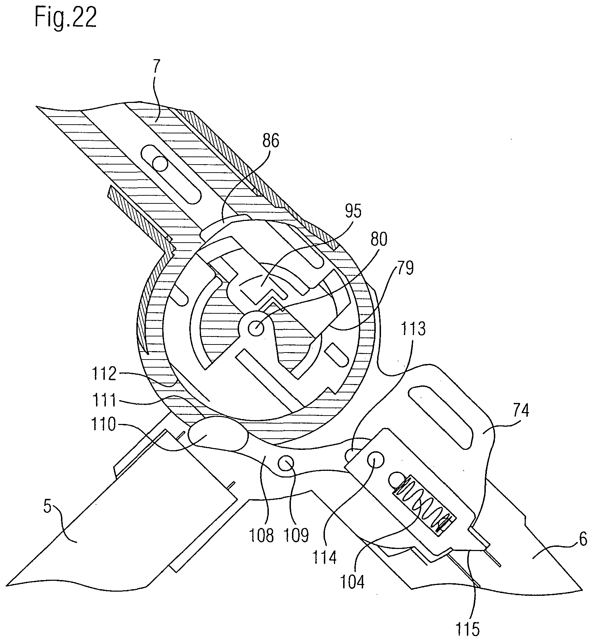

Soll der Kinderwagen 1 dagegen zusammengelegt werden, so wird zunächst der Schiebebügel 8 wieder entriegelt, wie in Fig. 22 zu sehen ist, und schließlich noch manuell aus der betreffenden radialen Fensetererweiterung 97 ausgerastet, durch ein weiteres manuelles Herabschwenken des Betätigungsgriffs 93 ähnlich wie in Fig. 17 zu sehen.

Sind dadurch die seitlich auskragenden Bereiche 95 des Verriegelungskörpers 86 vollständig aus den radialen Erweiterungen 97 herausgeschoben, so kann der Schiebebügel 8 weiter geschwenkt werden, bis er schließlich nahezu parallel zu der benachbarten Strebe 5, 6 des Fahrgestells 2 liegt, vorzugsweise zu der betreffenden Vorderradstrebe 5.

Will man den Kinderwagen 1 vollkommen zusammenlegen, ist nun noch die Hinterradstrebe 6 an die Vorderradstrebe 5 heranzuschwenken. Dazu muss die Hinterradstrebe 6 jedoch zunächst entriegelt werden. Dies leistet eine weitgehend selbsttätige Steuerung, deren Wirkungsweise den Fig. 21 bis 24 zu entnehmen ist:
Die gegenüber dem Gehäuse 28 des Gelenks 4 verschwenkbare Strebe 5, 6, vorzugsweise die Hinterradstrebe 6, ist an einer exzentrisch zu der ersten Drehachse 80 angeordneten, zweiten Drehachse 101 schwenkbar gelagert. Diese zweite Drehachse 101 befindet sich innerhalb des von der Mantelfläche 31 des Gelenks 3 seitlich auskragenden Fortsatzes 32. Je nach Ausführungform kann sich die betreffende Stebe 5, 6 zwischen äußeren Platten des Fortsatzes 32 befinden, oder innerhalb einer gehäuseseitig vorgesehenen Gabel des Fortsatzes 32.

Gesteuert wird das Ein- und Ausrasten der betreffenden Strebe 5, 6 durch einen zweiten Verriegelungskörper 102, der sich innerhalb des Gehäusefortsatzes 32 befindet.

Der zweite Verriegelungskörper 102 weist ein Langloch 103 auf, welches von der zweiten Drehachse 101 durchgriffen wird. Damit ist der Verriegelungskörper 102 begrenzt beweglich geführt. Innerhalb dieses Langlochs 103 ist eine zweite Feder 104 angeordnet, die als Druckfeder ausgebildet ist und/oder als Spiralfeder. Diese zweite Feder 104 stützt sich einerseits auf der zweiten Drehachse 101 ab, andererseits an dem davon entfernten Ende des Langlochs 103. Da sich die zweite Feder 104 von der ersten Drehachse 80 aus gesehen jenseits der zweiten Drehachse 101 befindet, ist sie bestrebt, den zweiten Verriegelungskörper 102 von der ersten Drehachse 80 weg zu drücken, in Richtung zu der betreffenden Strebe 5, 6 des Fahrgestells 2.

An der peripheren, der ersten Drehachse 80 abgewandten Stirnseite 105 verfügt der zweite Verrigelungskörper 102 über einen Vorsprung 106, der in der Lage ist, in eine rückwärtige Ausnehmung 107 der verschwenkbaren Strebe 5, 6 einzutauchen und diese dadurch zu arretieren.

Die zweite Feder 104 drückt den Verriegelungskörper 102 normalerweise gegen die Rückseite der verschwenkbaren Strebe 5, 6, so dass der Vorsprung 106 in der Ausnehmung 107 bleibt und der eingerastete Zustand erhalten bleibt.

Die Entriegelungsbewegung wird von der Bewegung des Zusammenklappens des Schiebebügels 8 abgeleitet. Dazu dient ein wippenförmiger, zweiarmiger Hebel 108, der innerhalb des Gehäuses 28 des Gelenks 4 gelagert ist, und zwar um eine zu der ersten und/oder zweiten Drehachse 80, 101 parallele Schwenkachse 109. Diese Schwenkachse durchsetzt das Gehäuse 28 des Gelenks quer und zwar etwa in demjenigen Bereich, wo der Fortsatz 32 von der Mantelfläche 31 des Gehäuses 28 des Gelenks 4 abzweigt.

Ein Ende dieses zweiarmigen Hebels 108 ist als Nocken 110 mit einer bereichsweise konvex gewölbten Oberfläche 111 ausgestaltet. Dabei ist der konvex gewölbte Oberflächenbereich der ersten Drehachse 80 zugewandt, und dieser Bereich 111 findet an dem Umfang des zentralen, scheibenförmigen Teils 81 eine Anlauffläche 112 mit variablem Abstand zu der ersten Drehachse 80.

Das andere Ende des zweiarmigen Hebels 108 greift in eine Vertiefung im rückwärtigen Ende des zweiten Verriegelungskörpers ein und wird von einem Langloch 113 durchsetzt, das ebenfalls zumindest teilweise in diese Vertiefung eintaucht. Diese Vertiefung wird von einem Stift 114 quer durchsetzt, und dieser Stift 114 durchgreift auch das Langloch 113 des zweiarmigen Hebels 108.

Der wippenförmige Hebel ist derart bemessen, dass er bei aufgeklapptem Schiebebügel 8 einen in radialer Richtung zurückweichenden Bereich der Anlauffläche 112 vorfindet und also unter dem Einfluss der zweiten Feder 104 mit seinem Nocken 110 radial nach innen schwenken kann, während dadurch der zweite Verriegelungskörper 102 radial nach außen bzw. nach unten gestoßen wird, mit seinem Vorspurng 106 in die rückwärtige Ausnehmung 107 der betreffenden Strebe 5, 6 hinein. Diese Strebe ist und bleibt eingerastet.

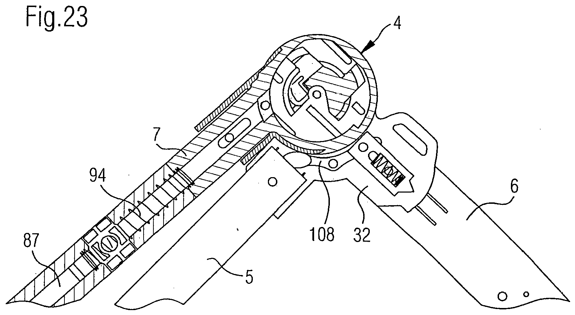

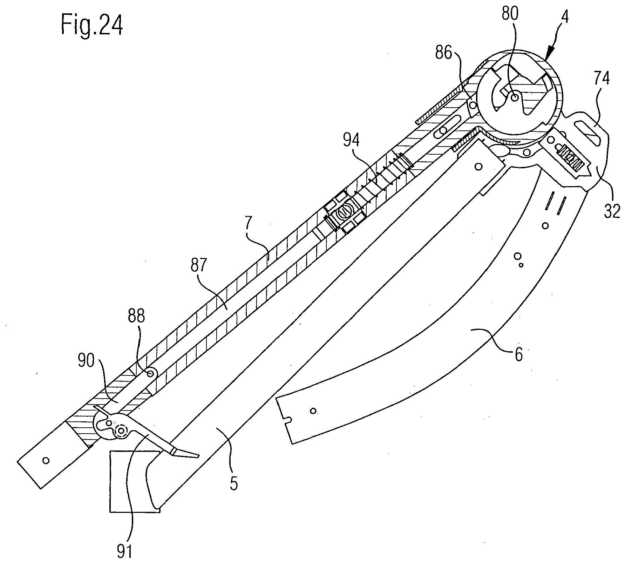

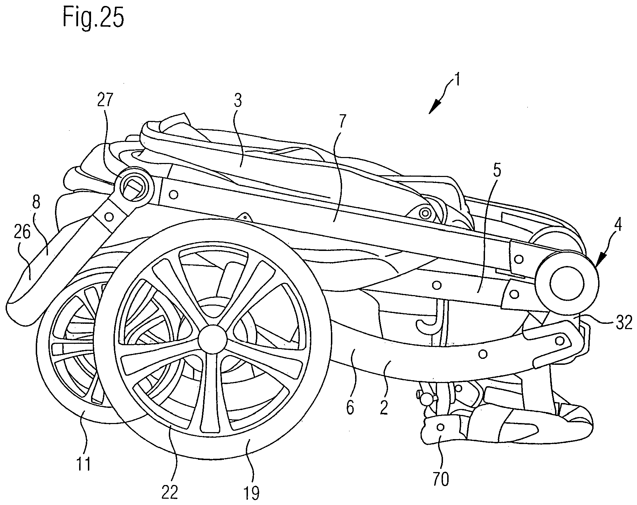

Wird nun der Schiebebügel 8 ganz herabgeschwenkt, wie in Fig. 23 zu sehen, so trifft der Nocken 110 allmählich auf einen radial weiter vortretenden Teil der Anlauffläche 112, wodurch der Nockenarm des wippenförmigen Hebels 108 radial nach außen geschwenkt wird. Dabei wird der andere Arm gleichzeitig radial nach innen geschwenkt, also zu der ersten Drehachse 80 hin und von der zweiten Drehachse 101 weg. Dadurch zieht dieser Hebel den in sein Langloch 113 eingreifenden Stift 114 und damit den gesamten zweiten Verriegelungskörper 102 von der betreffenden, verschwenkbaren Strebe 5, 6 zurück - der Vorsprung 106 verlässt die Ausnehmung 107 und die verschwenkbare Strebe 5, 6 kann an die gehäusefeste Strebe 5, 6 herangeschwenkt werden. Das Endergebnis, nämlich den vollständig zusammengefalteten Zustand, ist den Fig. 24 und 25 zu entnehmen.

Damit der Ausklappvorgang auch möglichst selbsttätig abläuft, ist an dem Vorsprung 106 die der Zusammenklapprichtung der betreffenden verschwenkbaren Strebe 5, 6 zugewandte Kante 115 abgeschrägt, weicht also mit zunehmender Einklapprichtung radial zur zweiten Drehachse 101 hin zurück. Wird die verschwenkbare Strebe 5, 6 wieder ausgeklappt, so streift dieser abgeschrägte Kantenbereich 115 an der Rückseite der ausklappenden Strebe 5, 6 entlang und drückt den zweiten Verriegelungskörper 102 jeweils so weit als nötig nach innen, bis der Vorsprung 106 vollständig der Ausnehmung 108 gegenüber steht und schließlich aufgrund der Kraft der zweiten Feder 103 in diese einschnappen kann.

**Bezugszeichenliste**

| | | | |
|---|---|---|---|
| 1 | Kinderwagen | 26 | Griff |
| 2 | Fahrgestell | 27 | Gelenk |
| 3 | Aufsatz | 28 | Gehäuse |
| 4 | Gelenk | 29 | innere Stirnseite |
| 5 | Vorderradstrebe | 30 | äußere Stirnseite |
| 6 | Hinterradstrebe | 31 | Mantelfläche |
| 7 | Seitenschenkel | 32 | Fortsatz |
| 8 | Schiebebügel | 33 | Anschluss |
| 9 | Drehgelenk | 34 | Scheibe |
| 10 | gabelförmige Aufnahme | 35 | Schlitz |
| 11 | Vorderrad | 36 | Steg |
| 12 | Speiche | 37 | Scheibe |
| 13 | Radnabe | 38 | Vertiefung |
| 14 | Felge | 39 | Fortsatz |
| 15 | Bereifung | 40 | Zunge |
| 16 | Strebe | 41 | Lasche |
| 17 | Transportmatte | 42 | Mantelfläche |
| 18 | Strebe | 43 | Tragbügel |
| 19 | Hinterrad | 44 | Seitenschenkel |
| 20 | Radnabe | 45 | Steg |
| 21 | Speiche | 46 | Beckenbügel |
| 22 | Felge | 47 | Hülse |
| 23 | Bereifung | 48 | Sitzmulde |
| 24 | Achse | 49 | oberer Bereich |
| 25 | Bowdenzug | 50 | Seitenrand |
| 51 | Druckknopf | 76 | rillenförmige Vertiefung |
| 52 | Mittelbereich | 77 | Außenseite |
| 53 | Randbereich | 78 | Gelenkplatte |
| 54 | Rückenlehne | 79 | Fenster |
| 55 | Sitzfläche | 80 | Drehachse |
| 56 | Übergangsbereich | 81 | scheibenförmiges Teil |
| 57 | Seitenstütze | 82 | Anschluss |
| 58 | Gurt | 83 | Fortsatz |
| 59 | Schultergurt | 84 | Schraube |
| 60 | Schlitz | 85 | Fenster |
| 61 | Gurtschloss | 86 | Verriegelungskörper |
| 62 | Beckengurt | 87 | Gestänge |
| 63 | Untergurt | 88 | Verbindungsgelenk |
| 64 | Sitzflächenstütze | 89 | Verbindungsgelenk |
| 65 | Fortsatz | 90 | Verbindungshebel |
| 66 | Vorderkante | 91 | Betätigungshebel |
| 67 | Unterschenkellasche | 92 | Schwenkachse |
| 68 | Tasche | 93 | Betätigungsgriff |
| 69 | Unterschenkelstütze | 94 | Feder |
| 70 | Gelenk | 95 | Bereich |
| 71 | Verdeck | 96 | Korpus |
| 72 | Verdeckbügel | 97 | Erweiterung |
| 73 | Befestigungsbereich | 98 | bogenförmiger Bereich |
| 74 | Sicherungsöse | 99 | Kontaktfläche |
| 75 | rippenförmige Erhebung | 100 | Pendant-Kontaktfläche |
| 101 | zweite Drehachse | 126 | Zugmittel |
| 102 | zweiter Verriegelungskörper | 127 | Öse |
| 103 | Langloch | 128 | Öffnung |
| 104 | zweite Feder | 129 | Steuerelement |
| 105 | Stirnseite | 130 | Querbohrung |
| 106 | Vorsprung | 131 | Verdickungselement |
| 107 | Ausnehmung | 132 | Federelement |
| 108 | zweiarmiger Hebel | 133 | Querstift |
| 109 | Schwenkachse | 134 | Gehäuse |
| 110 | Nocken | 135 | Steg |
| 111 | konvexe Oberfläche | 136 | Platte |
| 112 | Anlauffläche | 137 | scheibenförmiges Element |
| 113 | Langloch | 138 | Drehachse |
| 114 | Stift | 139 | bogenförmige Vertiefung |
| 115 | abgeschrägte Kante | 140 | Einrasterweiterung |
| 116 | Verriegelungsmechanik | 141 | ringförmiges Element |
| 117 | Betätigungselement | 142 | Rand |
| 118 | Scheitel | 143 | muldenförmige Vertiefung |
| 119 | Hülse | | |
| 120 | Lasche | | |
| 121 | vertiefter Bereich | | |
| 122 | Innenseite | | |
| 123 | Halbschale | | |
| 124 | Vertiefung | | |
| 125 | Stift | | |

## Patentansprüche

1. Kinderwagen (1), umfassend seitliche Gelenkverbindungen (4) mit Anschlüssen für je einen Schenkel (7) eines Schiebebügels (8), eine Vorderradstrebe (5) und/oder eine Hinterradstrebe (6), von welchen wenigstens zwei Elemente (5,6,7) um eine quer zur Fahrtrichtung verlaufende Gelenkachse (80) relativ zueinander verschwenkbar sind, wobei der Anschluss für ein erstes von wenigstens zwei gegeneinander verschwenkbaren Elementen (5,6,7) einer Gelenkverbindung (4) mit einem inneren, scheibenförmigen Teil (81) der Gelenkverbindung (4) drehfest verbunden ist, und der Anschluss für ein zweites der wenigstens zwei gegeneinander verschwenkbaren Elemente (5,6,7) der betreffenden Gelenkverbindung (4) mit wenigstens zwei zu dem scheibenförmigen Teil (81) parallelen Gehäuse-Stirnplatten (29,30) und/oder dazwischen angeordneten Gelenkplatten (75,77,78) der betreffenden Gelenkverbindung (4) drehfest verbunden oder gekoppelt ist, welche das innere, scheibenförmige Teil (81) an dessen beiden Flachseiten umgreifen, **dadurch gekennzeichnet, dass** zwecks Arretierung der Gelenkverbindung (4) wenigstens zwei Gehäuse-Stirnplatten (29,30) und/oder Gelenkplatten (75,77,78) zu beiden Seiten des inneren, scheibenförmigen Teils (81) mittels eines Verbindungsteils (95) aufeinander zu ziehbar und dadurch reibschlüssig und/oder formschlüssig von beiden Seiten an das innere, scheibenförmige Teil (81) der Gelenkverbindung (4) pressbar sind, zwecks Relativverstellung der Gelenkverbindung (4) unter Lockerung des Verbindungsteils (95) von dem inneren, scheibenförmigen Teil (81) jedoch so weit lösbar sind, dass der Reib- und Formschluss aufgehoben ist.

2. Kinderwagen (1) nach Anspruch 1, **dadurch gekennzeichnet, dass** die Arretierung wenigstens einer Gelenkverbindung (4) zweistufig ausgebildet ist, umfassend eine automatische Einrastung sowie eine manuell zu betätigende Verriegelung.

3. Kinderwagen (1) nach Anspruch 1 oder 2, **dadurch gekennzeichnet, dass** die Gelenkverbindung (4) von einem Gehäuse (28) umgeben ist, das eine zylindrische Grundform aufweist mit einer die Dreh- oder Gelenkachse (80) umgebenden Mantelfläche (31) und zwei dieselbe an beiden Enden abschließenden Stirnflächen (29,30), wobei vorzugsweise an den Innenseiten der Stirnflächen (29,30) des Gehäuses (28) oder an oder in einem oder mehreren daran festgelegter Teile (78) Vertiefungen und/oder Hinterschneidungen vorgesehen sind, worin ein demgegenüber verstellbares Gelenkelement (86) eingreifen kann, insbesondere im Bereich wenigstens einer fensterartigen Ausnehmung (79) des betreffenden Teils (78).

4. Kinderwagen (1) nach einem der vorhergehenden Ansprüche, **dadurch gekennzeichnet, dass** das verstellbare Gelenkelement (86)
a) in Bezug auf die Dreh- oder Gelenkachse (80) in zwei unterschiedlichen Raumrichtungen verstellbar ist, insbesondere in radialer Richtung einerseits sowie in azimutaler Richtung andererseits, und/oder
b) von einem an das Gelenk (4) angeschlossenen Teil des Kinderwagens (1) in azimutaler Richtung mitgenommen wird, insbesondere von einem Anschluss oder Seitenschenkel (7) des Schiebebügels (8).

5. Kinderwagen (1) nach einem der vorhergehenden Ansprüche, **dadurch gekennzeichnet, dass** Vertiefungen an den Innenseiten von Stirnflächen (29,30) des Gehäuses (28) oder an oder in einem oder mehreren, daran festgelegten Teilen (78) einem kreisbogenförmigen, zu der Dreh- oder Gelenkachse (80) konzentrischen Verlauf folgen, so dass das verstellbare Gelenkelement (86) zusammen mit dem daran angeschlossenen Teil (81) des Kinderwagens (1) drehverstellbar ist, insbesondere zwischen den Enden der kreisbogenförmigen Bereichs (98) der Vertiefung, Hinterschneidung und/oder fensterartigen Ausnehmung (79) des betreffenden Teils (78).

6. Kinderwagen (1) nach einem der vorhergehenden Ansprüche, **dadurch gekennzeichnet, dass** der kreisbogenförmige Bereich (98) der Vertiefung, Hinterschneidung und/oder fensterartigen Ausnehmung (79) des betreffenden Teils (78) an einer, zwei oder mehr Stellen radiale Erweiterungen (97) aufweist, welche eine Radialbewegung des verstellbaren Gelenkelements (86) an der betreffenden Stelle erlauben, vorzugsweise wobei eine, zwei, mehrere oder alle radialen Erweiterungen (97) des kreisbogenförmigen Bereichs (98) der Vertiefung, Hinterschneidung und/oder fensterartigen Ausnehmung (79) des betreffenden Teils (78)
a) sich von jenem Teil (78) weg radial nach außen erstrecken, und/oder
b) zur Begrenzung oder Vermeidung einer weiteren Drehverstellung des darin eingerasteten verstellbaren Gelenkelements (86) eine in einer Drehrichtung vordere sowie eine in der selben Drehrichtung hintere Begrenzungsfläche aufweisen, und/oder
c) an ihrem dem kreisbogenförmigen Bereich (98) abgewandten radialen Ende oder in dessen Nähe wenigstens eine Hinterschneidungs- oder Anlauffläche aufweisen, welche von dem verstellbaren Gelenkelement (86,95) umgreifbar oder kontaktierbar ist.

7. Kinderwagen (1) nach einem der vorhergehenden Ansprüche, **dadurch gekennzeichnet, dass** das verstellbare Gelenkelement (86) durch wenigstens ein Federelement (94) in der selben Radialrichtung vorgespannt ist, in welche sich eine, zwei, mehrere oder alle radialen Erweiterungen (97) des kreisbogenförmigen Bereichs (98) der Vertiefung, Hinterschneidung und/oder fensterartigen Ausnehmung (79) des betreffenden Teils (78) erstrecken.

8. Kinderwagen (1) nach einem der vorhergehenden Ansprüche, **dadurch gekennzeichnet, dass** die zueinander parallelen vorderen und hinteren Begrenzungsflächen einer radialen Erweiterung (97) des kreisbogenförmigen Bereichs (98)
a) parallel zueinander verlaufen, und/oder
b) zumindest in dessen Nähe keine Hinterschneidungen aufweisen oder keine das verstellbare Gelenkelement (86) passgenau umgreifende Hinterschneidungen.

9. Kinderwagen (1) nach einem der vorhergehenden Ansprüche, **dadurch gekennzeichnet, dass** die von dem verstellbaren Gelenkelement (86) umgreif- oder kontaktierbare Hinterschneidungs- oder Anlauffläche (99) an dem oder in der Nähe des Ende(s) einer, zweier, mehrerer oder aller, radialer Erweiterungen (97) der kreisbogenförmigen Bereichs (98) der Vertiefung, Hinterschneidung und/oder fensterartigen Ausnehmung (79) zumindest bereichsweise eben ist.

10. Kinderwagen (1) nach einem der vorhergehenden Ansprüche, **dadurch gekennzeichnet, dass** die von dem verstellbaren Gelenkelement (86) umgreif- oder kontaktierbare Hinterschneidungs- oder Anlauffläche (99) an dem oder in der Nähe des Ende(s) einer, zweier, mehrerer oder aller, radialer Erweiterungen (97) des kreisbogenförmigen Bereichs (98) der Vertiefung, Hinterschneidung und/oder fensterartigen Ausnehmung (79)
a) jeweils nach außen gewandt ist, also der nächstgelegenen Stirnfläche (29,30) des Gehäuses (28) zugewandt ist, und/oder
b) von der Dreh- oder Gelenkachse nicht lotrecht durchsetzt ist, sondern in Längsrichtung der betreffenden, radialen Erweiterung (97) zu deren peripherem Ende hin nach außen strebt, also der nächstgelegenen Stirnfläche des Gehäuses (28) zu.

11. Kinderwagen (1) nach einem der vorhergehenden Ansprüche, **dadurch gekennzeichnet, dass** das Lot an die von dem verstellbaren Gelenkelement (86) umgreif- oder kontaktierbare Hinterschneidungs- oder Anlauffläche (99) an dem oder in der Nähe des Ende(s) einer radialen Erweiterung (97) des kreisbogenförmigen Bereichs (98) der Vertiefung, Hinterschneidung und/oder fensterartigen Ausnehmung (79) mit der Dreh- oder Gelenkachse (80) einen Winkel einschließt, der
a) gleich 2° ist oder größer, vorzugsweise gleich 5° oder größer, insbesondere gleich 10° oder größer, und/oder der
b) gleich 45° ist oder kleiner, vorzugsweise gleich 30° oder kleiner, insbesondere gleich 20° oder kleiner.

12. Kinderwagen (1) nach einem der vorhergehenden Ansprüche, **dadurch gekennzeichnet, dass** an dem verstellbaren Gelenkelement (86) im Bereich einer oder vorzugsweise beider Stirnflächen (29,30) des Gehäuses (28) je ein Pendant (95,100) für eine dortige umgreif- oder kontaktierbare Hinterschneidungs- oder Anlauffläche (99) vorgesehen ist, vorzugsweise wobei das Pendant (95,100) des verstelbaren Gelenkelements (86) als zu der betreffenden, davon umgreif- oder kontaktierbare Hinterschneidungs- oder Anlauffläche (99) parallele Fläche (100) ausgebildet ist.

13. Kinderwagen (1) nach einem der vorhergehenden Ansprüche, **dadurch gekennzeichnet, dass** an dem verstellbaren Gelenkteil (86) im Bereich beider Stirnseiten (29,30) des Gehäuses (4) je eine zu einer dortigen Hinterschneidungs- oder Anlauffläche (99) parallele Fläche (100) vorgesehen ist.

14. Kinderwagen (1) nach einem der vorhergehenden Ansprüche, **dadurch gekennzeichnet, dass** die radiale Verstellung des verstellbaren Gelenkelements (86) mittels einer auf Zug und Druck belastbaren Mechanik bewirkbar ist, beispielsweise mittels eines Gestänges (87), vorzugsweise wobei die auf Zug und Druck belastbare Mechanik oder das Gestänge (87) innerhalb eines hohl ausgebildeten Holms oder Seitenschenkels (7) des Schiebebügels (8) aufgenommen ist.

15. Kinderwagen (1) nach Anspruch 14, **dadurch gekennzeichnet, dass** ein Element der auf Zug und Druck belastbaren Mechanik oder des Gestänges (87)
a) über ein an dem betreffenden Holm oder Seitenschenkel (7) des Schiebebügels (8) abgestütztes Federelement (94) vorgespannt ist, und/oder
b) als Stange ausgebildet ist, die keine gerade gestreckte Gestalt aufweist, sondern einem leicht gewölbten, bogenförmigen Verlauf folgt, der sich vorzugsweise nur in einer Richtung durchwölbt, oder ähnlich einem "S" wenigstens einen Wendepunkt aufweisen kann mit daran anschließenden Durchbiegungen in entgegengesetzten Richtungen, und/oder
c) mit einem Betätigungselement (91) im oberen Bereich des betreffenden Holms, Seitenschenkels (7) oder Griffs (26) des Schiebebügels (8) gekoppelt ist.

## Claims

1. Child's push chair, comprising lateral articulated joints (4) each one with junctions for a leg (7) of pushing handle (8), a front wheel strut (5) and/or a rear wheel strut (6), with at least two elements (5,6,7) of those being pivotable relative to each other about a joint axis (80) transverse to the direction of travel, wherein the junction for the first of at least two elements (5,6,7) of an articulated joint (4) pivotable relative to each other is connected in a torque-proof manner to an inner disc-shaped part (81) of the articulated joint (4), and wherein the junction for a second one of the at least two elements (5,6,7) of an articulated joint (4) relative to each other is connected or coupled in a torque-proof manner to at least two front plates (29,30) of the housing, which are parallel to the disc-shaped part (81), and/or to joint plates (75,77,78) of the regarding articulated joint (4) arranged between them, which encompass the inner disc-shaped part (81) on its both flat faces, **characterized in that,** for a locking of the articulated joint (4), at least two front plates (29,30) and/or joint plates (75,77,78) of the housing at both sides of the inner disc-shaped part (81) can be moved to each other by means of a connecting element (95), and thereby can be pressed from both sides against the inner disc-shaped part (81) of the articulated joint (4) to achieve a frictional and/or a positive locking contact, but, for a relative adjustment of the articulated joint (4), can be spaced from the inner disc-shaped part (81) through loosening the connecting element (95), so that the frictional or positive locking contact is eliminated.

2. Child's push chair according to claim 1, **characterized in that** the arresting of at least one articulated joint (4) is designed in a two-stage manner, comprising an automatic latching as well as a manually operated locking mechanism.

3. Child's push chair according to claim 1 or 2, **characterized in that** the articulated joint (4) is enclosed by a housing (28) comprising a cylindrical basic shape with a lateral surface (31) surrounding a rotational or joint axis (80), as well as two end faces (29,30) closing both ends thereof, wherein recesses and/or indentations are provided preferably on the inner sides of the end faces (29,30) of the housing (28) or on or inside of one or more parts (78) fixed to it, into which a joint element (86), which is adjustable relative to that, can engage, especially in the area of at least a window-like recess (79) of the relevant part (78).

4. Child's push chair (1) according to any of the preceding claims, **characterized in that** the adjustable joint element (86)
a) is adjustable in two different directions of space with respect to the rotational or joint axis (80), preferably in a radial direction on the one hand as well as in an azimuthal direction on the other, and/or
b) is entrained in the azimuthal direction by an element connected to the joint (4) of the child's push chair (1), preferably by a junction or lateral leg (7) of the pushing bar (8).

5. Child's push chair (1) according to any of the preceding claims, **characterized in that** recesses on the inner side of the end faces (29,30) of the housing (28) or on or in one or more elements (78) fixed to it, extend along a course in the shape of a circular arc concentric to the rotational or joint axis (80), so that the adjustable joint element (86), together with a part (81) of the children's push chair (1) connected to it, is rotationally adjustable, especially between the ends of the arc-shaped portion (98) of the depression, undercut and/or window-like recess (79) of the relevant part (78).

6. Child's push chair (1) according to any of the preceding claims, **characterized in that** the arc-shaped portion (98) of the depression, undercut and/or window-like recess (79) of the relevant part (78) comprises at one, two or more points radial extensions (79), which allow a movement in the radial direction of the adjustable joint element (86) at the regarding site, preferably wherein one, two, several or all radial extensions (97) of the arc-shaped portion (98) of the depression, undercut and/or window-like recess (79) of the relevant part (78)
a) extend away from that part (78) radially outwardly, and/or
b) for limitation or prevention of an additionally rotational shifting of the adjustable joint element (86) engaged therein, comprise a front boundary surface with respect to a direction of rotation, as well as a rear boundary surface with respect to the same direction of rotation, and/or
c) comprise on their radial end facing away from the arc-shaped part (98), or close to it, at least an undercut or a thrust surface, which can be encompassed or contacted by the adjustable joint element (86,95).

7. Child's push chair (1) according to any of the preceding claims, **characterized in that** the adjustable joint element (86) is preloaded by means of at least one spring element (94) in the same radial direction, into which one, two, several or all radial extensions (97) of the arc-shaped portion (97) of the depression, undercut and/or window-like recess (79) of the relevant part (78) extend.

8. Child's push chair (1) according to any of the preceding claims, **characterized in that** the front and the rear boundary surfaces, which are parallel to each other, of the radial extension (97) of the arc-shaped portion (98)
a) are aligned parallel to each other, and/or
b) do not comprise undercuts at least close to it, or do not comprise undercuts encompassing the adjustable joint element (86) in a precisely fitting manner.

9. Child's push chair (1) according to any of the preceding claims, **characterized in that** the undercut surface or the thrust surface (99) on the end or close to the end(s) of one, two, several or all radial extensions (97) of the arc-shaped portion (98) of the depression, undercut and/or window-like recess (79), which can be encompassed or contacted by the adjustable joint element (86), is flat at least in certain areas.

10. Child's push chair (1) according to any of the preceding claims, **characterized in that** the undercut surface or the thrust surface (99), which can be encompassed or contacted by the adjustable joint element (86), on the end or close to the end(s) of one, two, several or all radial extensions (97) of the arc-shaped portion (98) of the depression, undercut and/or window-like recess (79)
a) is facing outwardly, i.e. towards the nearest end face (29,30) of the housing (28), and/or
b) is not penetrated by the rotational axis or joint axis perpendicularly, but strives outwardly in a longitudinal direction of the relevant radial extension (97) towards its peripheral end, i.e. towards the nearest end face of the housing (28).

11. Child's push chair (1) according to any of the preceding claims, **characterized in that** the perpendicular to the undercut surface or thrust surface (99), which can be encompassed or contacted by the adjustable joint element (86), on the end or close to the end(s) of one, two, several or all radial extensions (97) of the arc-shaped portion (98) of the depression, undercut and/or window-like recess (79), forms an angle with the rotational or joint axis (80), which is
a) equal to 2° or larger, preferably equal to 5° or larger, especially equal to 10° or larger, and/or
b) equal to 45° or smaller, preferably equal to 30° or smaller, especially equal to 20° or smaller.

12. Child's push chair (1) according to any of the preceding claims, **characterized in that** a counterpart (95,100) for an encompassed or contacted undercut surface or thrust surface (99) is provided on the adjustable joint element (86) in the area of one or preferably both end faces (29,30) of the housing (28), preferably wherein the counterpart (95,100) of the adjustable joint element (86) is formed as a surface (100) parallel to the relevant, encompassed or contacted undercut surface or thrust surface (99).

13. Child's push chair (1) according to any of the preceding claims, **characterized in that** a surface (100) parallel to the undercut surface or thrust surface (99) is provided at the adjustable joint element (86) in the area of both end faces (29,30) of the housing (4) each.

14. Child's push chair (1) according to any of the preceding claims, **characterized in that** the radial adjustment of the adjustable joint element (86) is achievable by means of a mechanical system, which is loadable with compressive and tensile stress, for example, by means of a linkage (87), preferably wherein the mechanical system, which is loadable with compressive and tensile stress, or the linkage (87) is received within a hollow bar or lateral leg (7) of the pushing bar (8).

15. Child's push chair (1) according to any of the preceding claims, **characterized in that** an element of the mechanical system, which is loadable with compressive and tensile stress, or of the linkage (87)
a) is preloaded by means of a spring element (94), which is supported by the relevant bar or lateral leg (7) of the pushing bar (8), and/or
b) is formed as a rod, which does not have a straight shape, but extends along a slightly curved, arch-shaped course, which is preferably convex in one direction only, or which can comprise at least one inflection point with adjacent deflections in opposite directions like an "S", and/or
c) is coupled with an actuating element (91) in the upper portion of the relevant bar, lateral leg (7) or handle (26) of the pushing bar (8).

## Revendications

1. Poussette (1) comprenant des liaisons articulées latérales (4) munies de raccordements pour respectivement une branche (7) d'un guidon (8), une jambe de roue avant (5) et/ou une jambe de roue arrière (6) à partir desquels au moins deux éléments (5, 6, 7) sont susceptibles de pivoter relativement l'un par rapport à l'autre autour d'un axe d'articulation (80) transversalement par rapport au sens de la marche, en ce que le raccordement pour un premier d'au moins deux éléments (5, 6, 7) susceptibles de pivoter dans des sens opposés d'une liaison articulée (4) est relié de manière solidaire en rotation à une pièce intérieure en forme de disque (81) de la liaison articulée (4), et le raccordement pour un second d'au moins deux éléments (5, 6, 7) susceptibles de pivoter dans des sens opposés de la liaison articulée (4) concernée est relié de manière solidaire en rotation ou accouplé à au moins deux plaques frontales d'enveloppe (29, 30) parallèles à la pièce en forme de disque (81) et/ou aux plaques articulées (75, 77, 78) intercalées de la liaison articulée (4) concernée, qui enveloppent la pièce intérieure en forme de disque (81) au niveau de ses deux côtés plats, **caractérisée en ce que,** afin de bloquer la liaison articulée (4), au moins deux plaques frontales d'enveloppe (29, 30) et/ou plaques articulées (75, 77, 78) peuvent être au moyen d'une pièce de liaison (95) tirées l'une sur l'autre des deux côtés de la pièce intérieure en forme de disque (81) et ainsi serrées par friction et/ou de manière crabotée des deux côtés à la pièce intérieure en forme de disque (81) de la liaison articulée (4), mais peuvent toutefois à des fins de réglage relatif de la liaison articulée (4) par desserrement de la pièce de liaison (95) être désolidarisées de la pièce intérieure en forme de disque (81) de façon à ce que la friction et l'accouplement soient supprimés.

2. Poussette (1) selon la revendication 1, **caractérisée en ce que** le blocage d'au moins une liaison articulée (4) est de conception bi-étagée, comprenant un encliquetage automatique ainsi qu'un verrouillage à actionnement manuel.

3. Poussette (1) selon la revendication 1 ou 2, **caractérisée en ce que** la liaison articulée (4) est entourée d'une enveloppe (28) qui présente une forme de base cylindrique avec une surface d'enveloppe (31) entourant l'axe de rotation ou d'articulation (80) et deux faces frontales (29, 30) recouvrant celle-ci aux deux extrémités, des cavités et/ou des contredépouilles étant prévues de préférence au niveau des côtés intérieurs des faces frontales (29, 30) de l'enveloppe (28) ou au niveau ou dans une ou plusieurs pièces (78) qui y sont fixées, dans lesquelles un élément articulé réglable (86) peut s'y engager, en particulier dans la zone d'au moins un évidement en forme de fenêtre (79) de la pièce concernée (78).

4. Poussette (1) selon l'une des revendications précédentes, **caractérisée en ce que** l'élément articulé réglable (86)
a) est réglable en deux différentes directions spatiales par rapport à l'axe de rotation ou d'articulation (80), en particulier en sens radial d'une part ainsi qu'en sens azimutal d'autre part, et/ou
b) est entraîné en sens azimutal par une pièce raccordée à la liaison articulée (4) de la poussette (1), en particulier par un raccordement ou une branche latérale (7) du guidon (8).

5. Poussette (1) selon l'une des revendications précédentes, **caractérisée en ce que** des cavités sur les côtés intérieurs de faces frontales (29, 30) de l'enveloppe (28) ou au niveau ou dans une ou plusieurs pièces (78) qui y sont fixées, suivent un tracé en forme d'arc de cercle, concentrique par rapport à l'axe de rotation ou d'articulation (80) de sorte que l'élément articulé (86) réglable peut être réglé en rotation avec la pièce (81) de la poussette (1) qui y est raccordée, en particulier entre les extrémités de la zone en forme d'arc de cercle (98) de la cavité, de la contredépouille et/ou de l'évidement en forme de fenêtre (79) de la pièce concernée (78).

6. Poussette (1) selon l'une des revendications précédentes, **caractérisée en ce que** la zone en forme d'arc de cercle (98) de la cavité, de la contredépouille et/ou de l'évidement en forme de fenêtre (79) de la pièce concernée (78) comporte au niveau d'un, de deux ou de plus de deux points des extensions radiales (97) qui permettent un déplacement radial de l'élément articulé (86) réglable au niveau du point en question, de préférence **en ce qu'**une, deux, plusieurs ou toutes les extensions radiales (97) de la zone en forme d'arc de cercle (98) de la cavité, de la contredépouille et/ou de l'évidement en forme de fenêtre (79) de la pièce concernée (78)
a) s'étendent vers l'extérieur en s'éloignant radialement de ladite pièce (78), et/ou
b) présentent une surface de limitation avant dans un sens de rotation ainsi qu'une surface de limitation arrière dans le même sens de rotation pour limiter ou empêcher un autre réglage de rotation de l'élément articulé (86) réglable qui y est encliqueté, et/ou
c) présentent au moins une surface de contredépouille ou d'attaque à son extrémité radiale opposée à la zone en forme d'arc de cercle (98) ou à sa proximité, ladite surface de contredépouille ou d'attaque pouvant être raccordée ou enveloppée par l'élément articulé réglable (86, 95).

7. Poussette (1) selon l'une des revendications précédentes, **caractérisée en ce que** l'élément articulé réglable (86) est précontraint par au moins un élément ressort (94) dans le même sens radial dans lequel s'étendent une, deux, plusieurs ou toutes les extensions radiales (97) de la zone en forme d'arc de cercle (98) de la cavité, de la contredépouille et/ou de l'évidement en forme de fenêtre (79) de la pièce concernée (78).

8. Poussette (1) selon l'une des revendications précédentes, **caractérisée en ce que** les surfaces de limitation avant et arrière parallèles l'une par rapport à l'autre d'une extension radiale (97) de la zone en forme d'arc de cercle (98)
a) sont parallèles l'une par rapport à l'autre, et/ou
b) ne présentent au moins à sa proximité pas de contredépouille ou pas de contredépouille enveloppant exactement l'élément articulé réglable (86).

9. Poussette (1) selon l'une des revendications précédentes, **caractérisée en ce que** la surface de contredépouille ou d'attaque (99) pouvant être enveloppée ou raccordée par l'élément articulé réglable (86) est plane, tout au moins certaines zones, au niveau ou à proximité de l'extrémité d'une, de deux, de plusieurs ou de toutes les extensions radiales (97) de la zone en forme d'arc de cercle (98) de la cavité, de la contredépouille et/ou de l'évidement en forme de fenêtre (79).

10. Poussette (1) selon l'une des revendications précédentes, **caractérisée en ce que** la surface de contredépouille ou d'attaque (99) pouvant être enveloppée ou raccordée par l'élément articulé réglable (86) au niveau ou à proximité de l'extrémité d'une, de deux, de plusieurs ou de toute les extensions radiales (97) de la zone en forme d'arc de cercle (98) de la cavité, de la contredépouille et/ou de l'évidement en forme de fenêtre (79)
a) est respectivement tournée vers l'extérieur, par conséquent est tournée vers la face frontale (29, 30) la plus proche de l'enveloppe (28), et/ou
b) n'est pas traversée verticalement par l'axe de rotation ou d'articulation, mais dépasse vers l'extérieur en sens longitudinal de l'extension radiale (97) concernée par rapport à son extrémité périphérique, par conséquent vers la surface frontale la plus proche de l'enveloppe (28).

11. Poussette (1) selon l'une des revendications précédentes, **caractérisée en ce que** la perpendiculaire au niveau de la surface de contredépouille ou d'attaque (99) pouvant être enveloppée ou raccordée par l'élément articulé réglable (86) au niveau de ou à proximité de l'extrémité d'une extension radiale (97) de la zone en forme d'arc de cercle (98) de la cavité, de la contredépouille et/ou de l'évidement en forme de fenêtre (79) forme un angle avec l'axe de rotation ou d'articulation (80) qui
a) est égal à 2° ou supérieur, de préférence égal à 5° ou supérieur, en particulier égal à 10° ou supérieur, et/ou qui
b) est égal à 45° ou inférieur, de préférence égal à 30° ou inférieur, en particulier égal à 20° ou inférieur.

12. Poussette (1) selon l'une des revendications précédentes, **caractérisée en ce qu'**au niveau de l'élément articulé réglable (86) dans la zone d'une ou de préférence des deux faces frontales (29, 30) de l'enveloppe (28) respectivement un pendant (95, 100) est prévu pour une surface de contredépouille ou d'attaque (99) pouvant y être enveloppée ou raccordée, de préférence **en ce que** le pendant (95, 100) de l'élément articulé réglable (86) est réalisé sous forme de surface (100) parallèle par rapport à la surface de contredépouille ou d'attaque (99) concernée, pouvant être enveloppée ou raccordée par ce dernier.

13. Poussette (1) selon l'une des revendications précédentes, **caractérisée en ce que** respectivement une surface (100) parallèle par rapport à une surface de contredépouille ou d'attaque (99) s'y trouvant est ménagée au niveau de l'élément articulé réglable (86) dans la zone des deux faces frontales (29, 30) de l'enveloppe (4)_{[D1]}.

14. Poussette (1) selon l'une des revendications précédentes, **caractérisée en ce que** le réglage radial de l'élément articulé réglable (86) peut être effectué au moyen d'un mécanisme résistant à la traction et à la pression, par exemple au moyen de tiges (87), de préférence **en ce que** le mécanisme résistant à la traction et à la pression ou les tiges (87) est logé à l'intérieur d'un montant de forme creuse ou d'une branche latérale (7) du guidon (8).

15. Poussette (1) selon la revendication 14, **caractérisée en ce qu'**un élément du mécanisme résistant à la traction et à la pression ou des tiges (87)
a) est précontraint par l'intermédiaire d'un élément ressort (94) supporté au niveau du montant concerné ou de la branche latérale (7) du guidon (8), et/ou
b) est réalisé sous forme de barre qui ne présente pas une forme allongée droite, mais qui suit un tracé légèrement courbé, en forme d'arc qui ne se recourbe de préférence que dans un sens, ou qui peut présenter au moins un point d'inflexion semblable à un « S » avec des flexions adjacentes dans des sens opposés, et/ou
c) est accouplé à un élément d'actionnement (91) dans la zone supérieure du montant concerné, de la branche latérale (7) ou de la poignée (26) du guidon (8).
